(19) Europäisches Patentamt
European Patent Office
Office européen des brevets

(11) Publication number : **0 361 914 B1**

# (12) EUROPEAN PATENT SPECIFICATION

(45) Date of publication of patent specification : **13.12.95 Bulletin 95/50**

(51) Int. Cl.$^6$ : **G05D 1/02**

(21) Application number : **89309876.4**

(22) Date of filing : **28.09.89**

## (54) A driving way judging device and method

(30) Priority : **28.09.88 JP 243329/88**
**28.09.88 JP 243330/88**
**28.09.88 JP 243331/88**

(43) Date of publication of application : **04.04.90 Bulletin 90/14**

(45) Publication of the grant of the patent : **13.12.95 Bulletin 95/50**

(84) Designated Contracting States : **DE FR GB**

(56) References cited :
**COMPUTER GRAPHICS AND IMAGE PROCESSING. vol. 39, no. 1, July 1987, NEW YORK US pages 116 - 130; S. Liou et al.: "Road Following Using Vanishing Points"**
**SPIE MOBILES ROBOTS vol. 727, 1986, Bellingham, WA, US pages 161 - 168; R.DICKMANNS ET AL.: "A Curvature-based Scheme for Improving Road Vehicle Guidance by Computer-Vision"**
**IEEE JOURNAL OF ROBOTICS AND AUTOMATION. vol. 4, no. 4, August 1988, NEW YORK US pages 419 - 427; J. Lemoigne: "Domain-Dependent Reasoning for Visual Navigation of Roadways"**

(56) References cited :
**IEEE TRANSACTIONS ON PATTERN ANALYSIS AND MACHINE INTELLIGENCE vol. 10, no. 3, May 1988, NEW YORK US pages 362 - 373; C. Thorpe et al.: "Vision and navigation for the Carnegie mellon Navlab"**
**IEEE JOURNAL OF ROBOTICS AND AUTOMATION. vol. RA-3, no. 2, April 1987, NEW YORK US pages 124 - 141; A. WAXMAN ET AL.: "A Visual Navigation System for Autonomous Land Vehicles"**
**PROCEEDINGS OF THE INTERNATIONAL CONFERENCE ON ROBOTICS AND AUTOMATION, St.LOUIS, MISSOURI , MARCH 25-28, 1985, pages 862 - 867; A. WAXMAN ET AL.: "Visual Navigation of Roadways"**

(73) Proprietor : **HONDA GIKEN KOGYO KABUSHIKI KAISHA**
**1-1, 2-chome**
**Minami-Aoyama**
**Minato-ku, Tokyo (JP)**

(72) Inventor : **Nakayama, Shigeto**
**16-9, Mejirodai 3-chome**
**Hachioji-shi Tokyo (JP)**
Inventor : **Hasegawa, Hiroshi**
**18-12-503, Niiza 2-chome**
**Niiza-shi Saitama (JP)**

(74) Representative : **Tomlinson, Kerry John et al**
**Frank B. Dehn & Co.**
**European Patent Attorneys**
**Imperial House**
**15-19 Kingsway**
**London WC2B 6UZ (GB)**

EP 0 361 914 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a device and a method for judging a driving way, specifically to a driving way judging device and method which judge contours, such as straights, curves, inclines, declines, etc. by image processing.

In order to computer-control a drive of an automobile, it is necessary to recognize in real time the contour of a driving way, such as a road. To this end, it is proposed for example to draw optical or magnetic judging lines on driving ways for an optical sensor or magnetic sensor provided on the automobile to sense the judging lines. But this needs drawing judging lines on driving ways, and the automatic drive control systems for such use are not universal. Then, what is proposed here is taking an image of a driving way by a television camera installed in a vehicle and computer-processing the image data so as to recognize the contour of the driving way in real time. There are various methods for processing the image data. One example of the methods uses Hough transform as described in Japanese Patent Laid-Open Publication No 24310/1987 and Japanese Patent Laid-Open Publication No. 70916/1987. But this method has the following disadvantages. The image data prepared by taking a picture of a driving way includes not only data corresponding to the edges of the driving way but also data of buildings, trees around the driving way and data corresponding to the center line. Accordingly it takes a long data processing time to process the data accurately to distinguish the contour of the driving way. In speeding up the data processing, the computer system has to be complicated and becomes expensive. But what is firstly necessary to perform the automatic drive control of a vehicle is to distinguish the macroscopic contour of a driving way. This macroscopic judgment facilitates microscopic judgment of the contour of the driving way.

On the other hand, in the method described in the above-mentioned references, Hough transform is performed on respective characteristic points on an image taken by the camera to thereby give groups of straight lines corresponding to characteristics of characteristic point distributions. To be specific, the contours of white shoulder lines drawn on the edges of a driving way, the center line at the center thereof, guard rails along the driving way, and buildings along the driving way are given as characteristic points on the image. But the straight line groups include such a large number of straight lines that it is not easy to judge which straight lines correspond to the edges of the driving way. It is necessary especially to the case where this method is adapted to an automobile drive control to recognize the contour of a driving way in real time. Accordingly straight lines corresponding to the edges of the driving way have to be extracted in a very short period of time. But it has been difficult for the above-described method to perform such extraction.

Although a large number of straight lines are thus obtained, they include a number of straight lines having different attributes, i.e., a number of straight lines having different positions and directions. This makes it difficult to judge a direction of continuous run of the driving way in the image, i.e., to judge the direction of continuous run of the driving way. When an image of the driving way taken by the camera is studied in terms of straight arrangements of characteristic points, the image has regions in which characteristic straight arrangements of characteristic points appear, and in which they do not clearly appear. Generally it is easy in the former region to extract an approximate straight line to an arrangement of characteristic points. In the latter region it is difficult to extract an approximate straight line. But in the above-described prior art method, basically the data in both regions are processed collectively, not separately. Consequently it has been impossible to distinguish the contour of a driving way at high speed and with ease.

IEE Journal of Robotic and Automation, Vol. RA-3, No 2, April 1987, New York US, Pages 124-141, A. Waxman, J. Lemoigne et al describes a system for visual navigation by an autonomous land vehicle. The preambles to the independent claims are based on this document. Computer Vision, Graphics and Image Processing. Vol.39, No 1, July 1987, New York US, Pages 116-130; S. P. Liou & R.C. Jain and IEE Journal of Robotics and Automation. Vol. 4, No 4, August 1988, New York US, Pages 419-427; "Domain-dependent Reasoning for Visual Navigation of Roadways" describe other prior art visual navigation methods and systems.

A first object of this invention is to provide a device and method for judging the macroscopic contour of a driving way at high speed and with ease.

A second object of this invention is to provide a device and a method for extracting at high speed and with ease a pair of straight lines opposed to each other on the right and left edges of a driving way, based on a number of straight lines obtained by processing an image data.

A third object of this invention is to provide a device and a method for accurately judging inclines, declines and curves of a driving way, based on positional relationships between a pair of straight lines corresponding to the edges of the driving way.

A driving way judging device according to this invention comprises image dividing means for dividing the data into at least two regions including a lower region of the image taken of the driving way and an upper region thereof; lower straight line extracting means for extracting a first lower straight line approximate to a characteristic point distribution appearing corresponding to one of the edges of the driving way in the lower region; upper straight line extracting means for extracting a first upper straight line approximate to a characteristic point distribution appearing corresponding to one of the edges of the driving way in the upper region; and is characterized in that it further comprises: lower straight line selecting means for selecting a second lower straight line out of a group of straight lines approximate to a characteristic point distribution appearing corresponding to the other of the edges of the driving way, based on a position of the first lower straight line and preset width information of the driving way; upper straight line selecting means for selecting a second upper straight line out of a group of straight lines approximate to a characteristic point distribution appearing corresponding to the other of the edges of the driving way, based on a position of the first upper straight line and preset width information of the driving way; and judging means for judging a contour of the driving way based on a lower straight line intersection of the first and second lower straight lines, and an upper straight line intersection of the first and the second upper straight lines. In this device, an image is divided into a first and a second region so as to find straight lines in the respective regions. In the lower region on the near side is an image of substantially only a driving way. Accordingly under no influence of buildings along the driving way in extracting straight lines, the contour of the driving way can be judged accurately and easily. This device can extract straight lines corresponding to both edges of a driving way based on preset width information of the driving way. That is, a second straight line corresponding to one of the edges of the driving way can be decided in relationship with a first straight line corresponding to the other of the edges, based on the width information of the driving way.

A driving way judging process for judging a contour of a driving way by processing data of an image taken of the driving way according to this invention comprises a first step of dividing the data into at least two regions including a lower region and an upper region of the image taken of the driving way; a second step of extracting a straight line approximate to characteristic point distributions appearing corresponding to one of the edges of the driving way in the lower region; a third step of extracting a straight line approximate to that of the characteristic point distribution appearing corresponding to one of the edges of the driving way in the upper region; and is characterized in that said second step comprises extracting a pair of straight lines approximate to characteristic point distributions appearing corresponding to one and the other of the edges of the driving way in the lower region; and said third step comprises extracting a pair of straight lines approximate to those of the characteristic point distributions appearing corresponding to one and the other of the edges of the driving way in the upper region; and in that the process comprises a fourth step of judging a contour of the driving way, based on a positional relationship between an intersection of the lower straight lines of the lower pair of straight lines, and an intersection of the upper straight lines of the upper pair of straight lines. Preferably, in this process a first straight line is extracted in the lower region (the first region) where a straight line corresponding to a characteristic point distribution can be easily extracted, and based on the first straight line, a second straight line is extracted in the upper region (the second region) where a straight line cannot be extracted easily corresponding to a characteristic point distribution. The first and second straight lines preferably intersect each other near a boundary between the first and the second regions. In a preferred embodiment of this process, out of a number of straight lines given by the image processing the one corresponding to one of the edges of a driving way is decided, and a straight line corresponding to the other of the edges is predicted based on relationships between a horizon and a width of the driving way (a road). Based on this prediction, a straight line corresponding to the other of the edges is extracted from the straight lines.

The present invention will become more fully understood from the detailed description given hereinbelow and the accompanying drawings which are given by way of illustration only, and thus are not to be considered as limiting the present invention.

## Brief Description of the Drawings

Fig. 1 is a functional block diagram of the device according to one embodiment of this invention;

Fig. 2 is a flow chart of the general processing of the driving way judging method according to one embodiment of this invention;

Figs. 3(a) and (b) are views explaining positions where a camera is mounted on an automobile;

Figs. 4(a) - (c) are views explaining relationships of locations of the automobile on a driving way and images taken by the camera;

Fig 5 is a view explaining the setting of a first region A1 and a second region A2 in the image;

Figs. 6(a) and (b) are views explaining Hough transform used in the method and device according to the embodiment;

Fig. 7 is a view explaining filtering used in the method and the device according to the embodiment;

Fig. 8 is a view explaining results of the Hough transform and sorting;

Fig. 9 is a flow chart explaining the steps of clustering:

Fig. 10 is a view specifically explaining a result of the clustering;

Fig. 11 is a flow chart of extraction and selection of straight lines in a first region A1 of an image;

Fig. 12 is a flow chart of selecting a straight line;

Fig. 13 is a flow chart of extraction and selecting of straight lines in a first region A2 of an image;

Fig. 14 is a view explaining in an image the extraction and selection of straight lines $g_1$ - $g_4$ corresponding to the edges of a driving way;

Figs. 15 (a) - (d) are views explaining judgment of contours of a driving way, such as a straight, right curve, incline and decline;

Figs. 16(a) - (e) are views explaining the steps of selecting, based on a first straight line corresponding to one of the edges of a driving way, a second straight line corresponding to the other of the edges of the driving way; and

Figs. 17(a) - (f) are views explaining the steps of extracting and selecting straight lines corresponding to the edges of a driving way with an image divided in a plurality of regions.

As shown in Fig. 1, an analog image data of a driving way taken by a camera 1 mounted on a vehicle is converted into digital data by an A/D converter 2 to be temporarily stored in an image memory 3. Digital image data read from the image memory 3 is supplied to a pretreating unit 4. In the pretreating unit 4, on this digital image data are performed a differentiation for the edge detection, a threshold treatment based on a look-up table (LUT), a setting of regions to be treated, a transformation of coordinate system, etc. A DDA unit 5 performs the so-called digital differential analysis (DDA). Here in the DDA unit 5 Hough transform is conducted in the pipe-line system. This Hough transform gives groups of straight lines corresponding to characteristics of the image.

Data of the straight line groups given by the Hough transform are supplied to a neighboring peak filtering unit 6. In the unit 6, eight-neighboring peak filtering, for example, is performed to select peak data. The selected peak data are supplied to a peak sorting unit 7 to be arranged in decreasing order of magnitude. Subsequently in a clustering unit 8 a representative value of the peak data is selected. This representative value is supplied to a straight line extracting/selecting unit 9. Data of the extracted/selected straight lines are supplied to a judging unit 10. In the judging unit 10 the contour of the driving way, such as a width, curve, incline, decline, etc., are judged. A judged output is supplied to an outside device(not shown), e.g., an automatic drive controller, while supplied to a monitor control unit 11 to be displayed by a CRT monitor 12 in a live image of the driving way and also in line components. The operations of the above-described units are controlled by a controller 13. An initial value setting unit 14 is for setting initial data of the width of a driving way, etc.

The operation of the device according to the above-described embodiment will be explained below.

The flow chart of Fig. 2 shows the general procedure of a processing operation. When a processing operation is started, an initial setting is performed (Step 201). In this initial setting step, a driving way width WR, an elevation angle $\theta_0$, a focal length f of the lens of the camera 1, a height $H_c$ of the position of the camera 1 are set. This procedure will be explained with reference to Figs. 3 and 4.

Assuming that, as shown in Fig. 3(a), a vehicle 32 is driving on a driving way 31 with the camera 1 secured to the vehicle 32, an elevation angle $\theta_0$ of the camera 1, and a height $H_c$ of a position of the camera can be set as known values, based on the structure of the vehicle 1. A focal length f can be set as a known value, based on the structure of the camera 1. Fig. 3(b) is an enlarged view of the positional relationship of the optical system of Fig. 3(a). A driving way width WR is set as shown in Fig. 4. With the above-described data set, a driving way width wr at the lower end of an image can be given. That is, a driving way width wr on the image can be given by

$$wr = (WR' \cdot f) / \{(L_{low} + H_c \cdot \tan\theta_0) \cos\theta_0\} \quad (1).$$

A distance $L_{low}$ which can be covered at the lower end of the image is given

$$L_{low} = H_c / \tan(\theta_0 + \tan^{-1}(y_{low}/f)) \quad (2).$$

A driving way width WR' for the case that the direction of the driving way is slant to the camera 1 is given based on an inclination angle $\psi$ by

$$WR' = WR/\sin\psi. \quad (3)$$

Subsequently a position of a horizon on the image is computed (Step 202 in Fig. 2). A position $H_0$ of the horizon can be given as shown in Fig. 3(b) by

$$H_0 = f \cdot \tan\theta_0. \quad (4)$$

Then a first region A1 and a second region A2 of the image are set (Step 204 in Fig. 2). That is, as shown in Fig. 5, the first region A1 covers the near side of the driving way 31, and the second region A2 covers the far side of the driving way 31. The first and the second regions A1, A2 are set in a ratio of 3:2 so that the upper end of the second region A2 substantially agrees with a position $H_0$ of the horizon.

When these preparatory steps are finished, image data are inputted and the processing of the data are repeatedly executed for judgment of the driving way. That is, analog image data is converted into digital data by an A/D converter 2. This digital data is inputted through an image memory 3 in Fig. 1 to a pretreating unit 4 for required pretreatment (Step 205 in Fig. 2). In the pretreating unit 4 the digital data is edge-detected by, e.g., a Sobel. The resultant edged data is Hough transformed by a DDA unit 5 in Fig. 1. The Hough transform is conducted in the pipe-line system by a plurality of serially connected DDA circuits (not shown). The processing of the edged data is explained in, e.g., U.S. Patent No. 3069654. That is, in an image showing a distribution of edge points, a straight line passing through the edge points is imaged, and a perpendicular is drawn to this straight line from a required origin. If the length of the perpendic-

ular is $\rho$, the angle of this perpendicular to the horizontal axis of the coordinate system on the image is $\theta$, and the value of $\theta$ is varied, the straight line group is converted into a sine curve which is called Hough curve. This sine curve is drawn in the $\rho$-$\theta$ plane. This Hough curve varies depending on an edge point, and edge points aligned on the same straight line on the image have one intersection in the $\rho$-$\theta$ plane. This makes it possible to obtain the position and inclination of a straight line g approximate to an arrangement of edge points in the $\rho$ and $\theta$ values by checking the overlap of the Hough curves in the $\rho$-$\theta$ plane.

This will be explained below with reference to Fig. 6.

It is assumed that there are three edge points $EP_0$, $EP_1$, $EP_2$ in x-y plane, an image plane, as shown in Fig. 6(a). Then one Hough curve (sine curve) is drawn through each edge point $EP_0$, $EP_1$, $EP_2$ in the x-y plane. Two Hough curves through the edge points $EP_0$, $EP_1$ intersect at coordinates $(\rho_1,\theta_1)$, two Hough curves through $EP_0$, $EP_2$ intersect at coordinates $(\rho_2, \theta_2)$. Here is assumed that fifteen edge points $EP_0$ - $EP_{14}$ are arranged as shown in Fig. 16(b). One Hough curve is drawn through each edge point in the $\rho$ - $\theta$ plane. It is seen that nine Hough curves through the edge points $EP_0$ - $EP_8$ intersect at coordinates $(\rho_c,\theta_c)$, the three Hough curves through the edge points $EP_8$ - $EP_{10}$ at coordinates $(\rho_b,\theta_b)$, and the five Hough curves $EP_{10}$ - $EP_{14}$ intersect at coordinates $(\rho_a,\theta_a)$.

As seen from the above explanation, a straight line is given, based on the coordinate values $(\rho,\theta)$ of those of the intersections of the Hough curves where the intersection takes place more frequent, approximately to the arrangement of the edge points. Based on the thus obtained straight line, a characteristic arrangement of data on the image, i.e. a characteristic point distribution can be recognized.

Next, the filtering in Step 210 in Fig. 2 will be explained below with reference to Fig. 7.

Fig. 7 shows count values in the $\rho$-$\theta$ coordinate system, i.e., overlaps of Hough curves corresponding to respective edge points. The eight-neighboring peak filtering is conducted by comparing a count value $C_{i,j}$ at coordinates $(\rho_i,\theta_j)$ with the count values at eight coordinates neighboring the coordinates $(\rho_i,\theta_j)$. That is, when the count value $C_{i,j}$ is larger than count values $C_{i-1,j-1}$ - $C_{i+1,j+1}$ at coordinates $(\rho_{i-1},\theta_{j-1})$ - $(\rho_{i+1},\theta_{j+1})$, the count value $C_{i,j}$ is selected as peak data. Thus, in the area in Fig. 7 indicated by F1, for example, the count value 7 at coordinates $(\rho_3,\theta_3)$ is extracted as peak data, but in the area indicated by F2 the count value 6 at coordinates $(\rho_4,\theta_6)$ is not extracted as peak data.

The filtering is followed by the sorting. In the sorting, peak data based on $\rho,\theta$ coordinate values and count values described above are rearranged in decreasing order of the count values C. The sorting is conducted by a software or by an exclusive hardware.

This sorting is followed by clustering in which representative values are selected (Step 213 in Fig. 2).

Fig. 8 shows an example of sorted peak data. In Fig. 8, the count values $C_0$, $C_1$, $C_2$, ..., $C_{n-1}$ have been arranged by the sorting in the order of $C_0>C_1>C_2....>C_{n-1}$. In the clustering, as shown by the flow chart of Fig. 9, firstly k=0, and i=1 are set (Step 501). Then the processings of Steps 502 - 515 are repeated. The clustering will be generally explained with k and i set as above. First, it is checked whether an i-th straight line with i>k has already been associated with other straight lines (Step 502). When not, it is checked whether coordinate values $\rho$, $\theta$ have the relationships

$$\rho_k - \Delta\rho \leqq \rho_i \leqq \rho_k + \Delta\rho$$

$$\theta_k - \Delta\theta \leqq \theta_i \leqq \theta_k + \Delta\theta$$

(Step 504). Only when the above-described relationships hold, the i-th straight line is recognized as associated with a k-th straight line (Step 505). Next, 1 is added to i (Step 507), and only when data is present (Step 508), it is checked whether the i-th count value $C_i$ is too small compared with a maximum count value $C_0$ (Step 510). This comparison is based on the fact that a too small count value does not much need the data processing.

When the count value $C_1$ is not too small, the processing returns again to Step 502. When the count value $C_1$ is too small, 1 is added to k (Step 511), and another clustering processing is started in Step 513. That is, it is checked whether the k-th straight line has been already associated with other straight lines (Step 513). If it has, 1 is added to k in Step 511, and Step 513 is again executed. If the k-th straight line has not been associated with other straight lines, an i-th next to the k-th (=k+1) straight line (Step 515) is processed again by Step 502.

Fig. 10 shows a result of the above-described clustering. In Fig. 10, first representative values are $\rho$=200 [dots], $\theta$=45 [deg.] at a count value of 1000. Second representative values are $\rho$=240 [dots], $\theta$=123 [deg.] at a count value of 780.

This processing is followed by extraction of straight lines in the first region A1 of Step 214 in Fig. 2. Figs. 11 - 13 show the flow chart of the extraction of Step 214. In extracting straight lines in the first region A1, firstly a straight line corresponding to N-th representative values is taken out as a first straight line $g_1$ (Step 551), and it is checked whether this straight line corresponds to the edge of the driving way on the left or the right side with respect to the camera 1 (Step 552). When the straight line is on the right side, a second straight line $g_2$ is supposed to be on the left side, and theoretical values of the second straight line are given (Step 554). When the straight line is on the left side, the second straight line $g_2$ is supposed to be on the right side, and the theoretical values of the second straight line are given (Step 555). The above-described processing is repeated (Step 558) until representative values other than those corresponding to the first straight line $g_1$ which are approximate to the theoretical values are found (Step 557). If a first straight line is represented by $g_1=(\rho_1,\theta_1)$, theoretical values $\rho_{2r},\theta_{2r}$ of a straight line $g_{2r}=(\rho_{2r},\theta_{2r})$ on the right side are given by

$$\rho_{2r} = H_0 \cdot \sin\theta_{2r}$$
$$\theta_{2r} = \tan^{-1}\{[(\rho_1 / \cos\theta_1) + wr] / H_0\} \quad (5).$$

On the other hand, theoretical values $\rho_{21}$, $\theta_{21}$ of a straight line $g_{21}=(\rho_{21},\theta_{21})$ on the left side are given by

$$\rho_{21} = H_0 \cdot \sin\theta_{21}$$
$$\theta_{21} = \tan^{-1}\{[(\rho_1 / \cos\theta_1) - wr] / H_0\}. \quad (6)$$

Here, if it is assumed that the first straight line $g_1$ is as shown in Fig. 14, the theoretical values are given based on the relationship between a width wr of the running way and a position $H_0$ of the horizon in the image. Further if it is assumed that a straight line of the representative values corresponding to the thus given theoretical values is the straight line $L_2$ in Fig. 14 as a result of the processing of Step 560, an operation is performed for deciding the straight line $L_2$ as a candidate straight line for the second straight line $g_2$ (Step 561).

The processing of Step 561 is shown by the flow chart of Fig. 12. A group of candidate straight lines for the second straight line $g_2$ is formed (Step 571). The group is formed by, e.g., collecting those representative values which are in a required range, a method in which the Hough transform is conducted at smaller angles, or other methods. In any method, in addition to the straight line $L_2$ approximate to theoretical values, a group including the second straight line $g_2$ is formed (see Fig. 14). Next, numbers of edge points EP below respective candidate straight lines are counted (Step 572). A straight line having a largest number of edge points therebelow is accepted as the second straight line $g_2$. Thus, free from the influence of the straight lines $L_2$, $L_2'$, the real straight line $g_2$ can be selected. When the processing on the first region A1 as described above is over, the processing on the second region A2 is started following the steps of the flow chart of Fig. 13.

First, intersections P, Q of the first and the second straight lines $g_1$, $g_2$ in the first region A1 with the upper end of the first region A1 are found (Step 581). Next, a straight line passing near the intersection P is selected as a candidate for a third straight line $g_3$ (Step 582). The processing of the flow chart of Fig. 12 is performed on this candidate straight line for the decision of a straight line (Step 584), which enables the real third straight line $g_3$ to be extracted under no influence of neighboring straight lines, e.g., the straight line $L_3$ in Fig. 14. Then the step of extracting a fourth straight line $g_4$ follows (Step 585). This step is the same as Steps 551 - 560 in Fig. 11. Finally, the processing of Fig. 12 for deciding a straight line is performed, and the fourth straight line $g_4$ can be extracted under no influence of, e.g., the straight line $L_4$ in Fig. 14.

The above-described processing is followed by judging a contour of the driving way (Step 217 in Fig. 2).

This judgment is made based on the relative positional relationship between the intersection $R_1$ of the first and the second straight lines $g_1$, $g_2$, and the intersection $R_2$ of the third and the fourth straight lines $g_3$, $g_4$ as shown in Fig. 15(a). That is, when the driving way is straight and flat, the coordinates of the intersections $R_1$, $R_2$ substantially agree. In contrast to this, as shown In Fig. 15(b), when the driving way curves right, the intersection $R_2$ appears right of the intersection $R_1$. When the driving way curves left, the intersection $R_2$ appears left of the intersection $R_1$. As shown in Fig. 15(c), when the driving way is an upward slope, the intersection $R_2$ appears above the intersection $R_1$. As shown in Fig 15(d), when the driving way is a downward slope, the intersection $R_2$ appears below the intersection $R_1$. Accordingly, by obtaining coordinates of the intersections $R_1$ and $R_2$, and comparing them, a contour of a driving way can be judged.

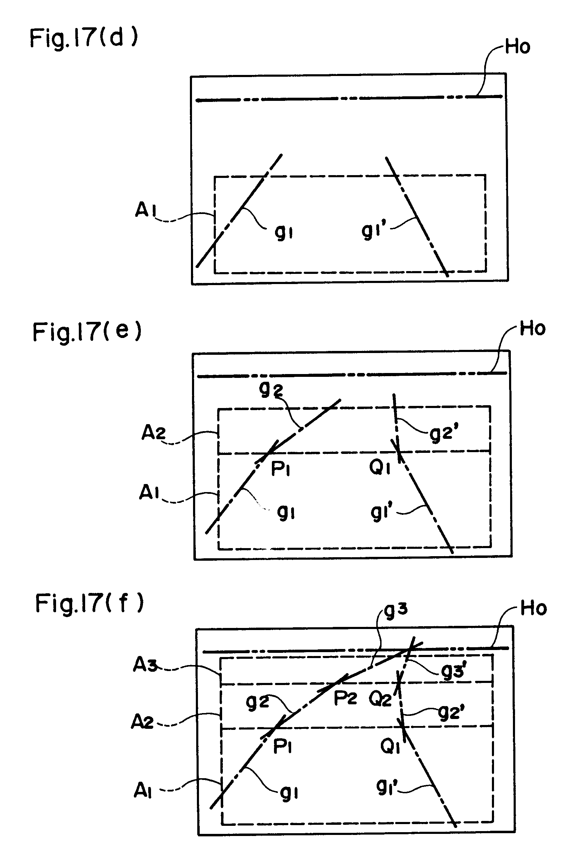

Next, examples of the extraction and selection of a straight line in another embodiment will be explained below with reference to Figs. 16 and 17. It is assumed that a view taken by a camera mounted on a vehicle is as shown in Fig. 16(a). In this view, the driving way has edges 51, 51, a guard rail 52 running along the left edge, footpaths running among fields, and mountain 55 ranging on the horizon 54.The image of this view taken by the camera is differentiated to obtain edged data, and the edged data are shown in dots 56 in, e.g., Fig. 16(b). The Hough transform is conducted on the respective dots 56 and the process ings are conducted to extract line components. Then a group of straight lines including straight lines $L_1$ - $L_5$, $g_1$, $g_2$ as shown in Fig. 16(c) is given.

On this result of the Hough transform the filtering, sorting and clustering are conducted, and a straight line approximate to the most characteristic arrangement of the image data (dots 56) is given in representative values. If it is assumed that a straight line $g_1$ corresponding to the right edge 51 of the driving way corresponds to maximum representative values, the straight line $g_1$ is drawn as in Fig. 16(d), and the straight line $g_1$ intersects the horizon position $H_0$ and the lower parallel line $H_w$.

The horizon position $H_0$ can be computed based on camera positional information, such as a position of the camera, inclinations of the camera, etc. A distance between the edges 51, 51 of the driving way at the lower parallel line $H_w$ can be computed based on the camera positional information and driving way information, such as driving way widths. It is theoretically given that the other edge 51 is either of straight lines $L_L$ and $L_R$ in Fig. 16(d). Then the representative values are checked to see whether the left straight line corresponds to the other edge 51, and a second

straight line $g_2$ can be given as shown in Fig. 16(e).

Fig. 17 shows another example of the extraction and selection of a straight line in the embodiment. It is assumed that an image taken by the camera is as shown in Fig. 17(a) for example. This image is processed in the same way as Figs. 16(a) - (c) to be expressed in dots in Fig. 17(b). By counting intersections of Hough curves, a group of straight lines including straight lines $L_1$ - $L_5$ as shown in Fig. 17(c) is found. As seen from Fig. 17 (c) the characteristics of the straight lines corresponding to the edges 51, 51 of a driving way are comparatively clear at the lower side (near side) of the image, whereas at the upper side (far side) of the image the straight lines corresponding to the edges 51, 51 of the driving way are mixed with straight lines corresponding to the other objects in the image, and it is difficult to judge characteristics of the straight lines corresponding to the edges 51, 51.

Then as shown in Fig. 17(d), a first region A1 is set on the lower side (near side) of the image where the dots 56 arrange characteristically, and straight lines corresponding to the edges 51, 51 of the driving way are searched. This search may be made by checking representative values. In most cases, straight lines of maximum representative values correspond to the edges 51, 51. Here, if it is assumed that the straight lines $g_1$, $g_1'$, corresponding to the edges 51, 51 correspond to the maximum representative values and a next maximum representative values, these straight lines $g_1$, $g_1'$ can be depicted as shown in Fig. 17(d).

Then a second region A2 which is adjacent to the first region A1 is set as shown in Fig. 17(e). The second region is so set that the straight lines $g_1$, $g_1'$ in the first region A1 continue. Straight lines $g_2$, $g_2'$ corresponding to the edges 51, 51 in the second region A2 are extracted. Since intersections $P_1$, $Q_1$ of the straight lines $g_1$, $g_1'$ and $g_2$, $g_2'$ are supposed to be located near the boundary between the first and the second regions A1 and A2 as shown in Fig. 17(e), straight lines $g_2$, $g_2'$ in the second region can be found out of straight lines passing near the intersections $P_1$, $Q_1$. Besides, since an intersection between the straight lines $g_2$, $g_2'$ is supposed to be near to a horizon $H_0$, the straight lines $g_2$, $g_2'$ can be easily extracted.

Subsequently, a third region A3 is set continuous to the second region A2 as shown in Fig. 17(f) to find straight lines $g_3$, $g_3'$ corresponding to the edges 51, 51. These straight lines $g_3$, $g_3'$ can be easily obtained in the same way as the straight lines $g_2$, $g_2'$ in the second region A2. In this example, first of all, the processing is performed so as to extract approximate straight lines in a region (the first region A1) where arrangements of image data (dots) are characteristic, and then, based on the processing result, approximate straight lines are given in other regions (the second region A2, and following regions).

## Claims

1. A driving way judging device for judging a contour of a driving way by processing data of an image taken of the driving way, the device comprising:

   image dividing means for dividing the data into at least two regions including a lower region (A1) of the image taken of the driving way and an upper region (A2) thereof;

   lower straight line extracting means (4,5,6,7,8,9) for extracting a first lower straight line approximate to a characteristic point distribution appearing corresponding to one of the edges of the driving way in the lower region;

   upper straight line extracting means (4,5,6,7,8,9) for extracting a first upper straight line approximate to a characteristic point distribution appearing corresponding to one of the edges of the driving way in the upper region; and

   characterized in that it further comprises:

   lower straight line selecting means for selecting a second lower straight line out of a group of straight lines approximate to a characteristic point distribution appearing corresponding to the other of the edges of the driving way, based on a position of the first lower straight line and preset width information of the driving way;

   upper straight line selecting means for selecting a second upper straight line out of a group of straight lines approximate to a characteristic point distribution appearing corresponding to the other of the edges of the driving way, based on a position of the first upper straight line and preset width information of the driving way; and

   judging means (10) for judging a contour of the driving way based on a lower straight line intersection of the first and second lower straight lines, and an upper straight line intersection of the first and the second upper straight lines.

2. A driving way judging device according to claim 1, wherein the judging means (10) judges that the driving way curves right when the upper straight line intersection is right of the lower straight line intersection and that the driving way curves left when the upper straight line intersection is left of the lower straight line intersection.

3. A driving way judging device according to claim 1 or 2, wherein the judging means (10) judges that the driving way declines when the upper straight line intersection is below the lower straight line intersection, and that the driving way inclines when the upper straight line intersection is above the lower straight line intersection.

**4.** A driving way judging process for judging a contour of a driving way by processing data of an image taken of the driving way, the process comprising:

a first step of dividing the data into at least two regions including a lower region (A1) and an upper region (A2) of the image taken of the driving way;

a second step of extracting a straight line ($g_1$) approximate to characteristic point distributions appearing corresponding to one of the edges of the driving way in the lower region;

a third step of extracting a straight line ($g_2$) approximate to that of the characteristic point distribution appearing corresponding to one of the edges of the driving way in the upper region; and characterized in that:

said second step comprises extracting a pair of straight lines ($g_1$,$g_2$) approximate to characteristic point distributions appearing corresponding to one and the other of the edges of the driving way in the lower region;

and said third step comprises extracting a pair of straight lines ($g_3$,$g_4$) approximate to those of the characteristic point distributions appearing corresponding to one and the other of the edges of the driving way in the upper region;

and in that the process comprises a fourth step of judging a contour of the driving way, based on a positional relationship between an intersection of the lower straight lines of the lower pair of straight lines, and an intersection of the upper straight lines of the upper pair of straight lines.

**5.** A driving way judging process according to claim 4, wherein the fourth step judges that the driving way curves right when the intersection of the upper straight lines is right of the intersection of the lower straight lines, and judges that the driving way curves left when the former is left of the latter.

**6.** A driving way judging process according to claim 4 or 5, wherein the fourth step judges that the driving way declines when the intersection of the upper straight lines is below the intersection of the lower straight lines, and judges that the driving way inclines when the former is above the latter.

**7.** A driving way judging process according to claim 4, 4 or 6, wherein the second and third step are characterized in that the second straight line is extracted out of two of the groups of straight lines which are spaced on the right and the left sides from a position of the first straight line on the image by a distance corresponding to the width information of the driving way.

**8.** A driving way judging process as claimed in claim 4, 5, 6 or 7, the process further comprising:

a step of computing a position of a horizon (Ho) on the image, based on the preset position information of the camera; and wherein said third step comprises extracting a second straight line out of those of the groups of straight lines passing near an intersection of a position of the horizon and the first straight line and spaced from the first straight line by a distance corresponding to preset width information of the driving way.

**9.** A driving way judging process as claimed in claim 4, 5, 6, 7 or 8, wherein the lower region comprises a first region (A1) in which characteristic point distributions on the image appear more characteristically and the upper region comprises a second region (A2) which is adjacent to the first region in the direction of continuation of the characteristic point distributions; said process comprises

a step of giving straight line groups of a plurality of straight lines corresponding to the characteristic point distributions on the image; and said third step comprises

extracting a second pair of straight lines ($g_3$,$g_4$) approximate to those of the characteristic point distributions appearing corresponding to one and the other of the edges of the driving way in the second region out of those of the straight line groups passing near an intersection of a boundary of the first and the second regions and the first pair of straight lines.

**10.** A driving way judging process according to claim 9, wherein the step of giving straight line groups is executed before the step of dividing the image into at least two regions.

**11.** A driving way judging process according to claim 9 or 10, wherein the third step includes the step of extracting one of the first pair of straight lines ($g_1$, $g_2$) approximate to the one of the characteristic point distributions appearing corresponding to one of the edges of the driving way in the first region, and the step of selecting the other of the first pair of straight lines appearing corresponding to the other of the edges of the driving way, based on a position of the first straight line and preset width information of the driving way; and

the fourth step includes the steps of extracting one of the second pair of straight lines ($g_3$,$g_4$) approximate to the one of the characteristic point distributions appearing corresponding to one of the edges of the driving way in the second region out of those of the straight line groups passing near an intersection of a boundary between the first and the second regions, and said one of the first group of straight lines, and selecting the other of the second pair of straight lines appearing corresponding to the other of the edges of the driving way, based on a position of the second straight line and preset width information of the driving way.

## Patentansprüche

1. Fahrweg-Einschätzvorrichtung zum Einschätzen einer Kontur eines Fahrwegs durch Verarbeiten von Daten eines von dem Fahrweg aufgenommenen Bildes, wobei die Vorrichtung umfaßt:
ein Bildeinteilmittel zum Einteilen der Daten in wenigstens zwei Bereiche, umfassend einen unteren Bereich (Al) des von dem Fahrweg aufgenommenen Bildes und einen oberen Bereich (A2) diese Bildes;
ein untere-gerade-Linie-Extrahiermittel (4, 5, 6, 7, 8, 9) zum Extrahieren einer ersten unteren geraden Linie, die einer auftretenden charakteristischen Punktverteilung angenähert ist, die einem der Ränder des Fahrweges im unteren Bereich entspricht;
ein obere-gerade-Linie-Extrahiermittel (4, 5, 6, 7, 8, 9) zum Extrahieren einer ersten oberen geraden Linie, die einer auftretenden charakteristischen Punktverteilung angenähert ist, die einem der Ränder des Fahrweges im oberen Bereich entspricht; und
dadurch gekennzeichnet daß sie ferner umfaßt:
ein untere-gerade-Linie-Auswahlmittel zum Auswählen auf Grundlage einer Position der ersten unteren geraden Linie und einer vorgegeben Breite-Information des Fahrweges einer zweiten unteren geraden Linie aus einer Gruppe von geraden Linien, die einer auftretenden charakteristischen Punktverteilung angenähert sind, die dem anderen der Ränder des Fahrwegs entspricht;
ein obere-gerade-Linie-Auswahlmittel zum Auswählen auf Grundlage einer Position der ersten oberen geraden Linie und einer vorgegebenen Breite-Information des Fahrweges einer zweiten oberen geraden Linie aus einer Gruppe von geraden Linien, die einer auftretenden charakteristischen Punktverteilung angenähert sind; die dem anderen der Ränder des Fahrwegs entspricht; und
ein Einschätzmittel (10) zum Einschätzen einer Kontur des Fahrwegs auf Grundlage eines untere-gerade-Linie-Schnittpunkts der ersten und der zweiten unteren geraden Linie sowie eines obere-gerade-Linie-Schnittpunkts der ersten und der zweiten oberen geraden Linie.

2. Fahrweg-Einschätzvorrichtung nach Anspruch 1, in der das Einschätzmittel (10) einschätzt, daß der Fahrweg nach rechts biegt, wenn der obere-gerade-Linie-Schnittpunkt rechts des untere-gerade-Linie-Schnittpunkts liegt, und daß der Fahrweg nach links biegt, wenn der obere-gerade-Linie-Schnittpunkt links des untere-gerade-Linie-Schnittpunkts liegt.

3. Fahrweg-Einschätzvorrichtung nach Anspruch 1 oder 2, in der das Einschätzmittel (10) einschätzt, daß der Fahrweg abfällt, wenn der obere-gerade-Linie-Schnittpunkt unter dem untere-gerade-Linie-Schnittpunkt liegt, und daß der Fahrweg ansteigt, wenn der obere-gerade-Linie-Schnittpunkt über dem untere-gerade-Linie-Schnittpunkt liegt.

4. Fahrweg-Einschätzverfahren zum Einschätzen einer Kontur eines Fahrweges durch Verarbeiten von Daten eines von dem Fahrweg aufgenommenen Bildes, wobei das Verfahren umfaßt: einen ersten Schritt des Einteilens der Daten in wenigstens zwei Bereiche, umfassend einen unteren Bereich (A1) und einen oberen Bereich (A2) des von dem Fahrweg aufgenommenen Bildes;
einen zweiten Schritt des Extrahierens einer geraden Linie ($g_1$), die auftretenden charakteristischen Punktverteilungen angenähert ist, die einem der Ränder des Fahrweges in dem unteren Bereich entsprechen;
einen dritten Schritt des Extrahierens einer geraden Linie ($g_2$), die derjenigen der auftretenden charakteristischen Punktverteilungen angenähert ist, die einem der Ränder des Fahrweges in dem oberen Bereich entspricht; und
dadurch gekennzeichnet,
daß der zweite Schritt das Extrahieren eines Paares von geraden Linien ($g_1$, $g_2$) umfaßt, die auftretenden charakteristischen Punktverteilungen angenähert sind, die dem einen und dem anderen der Ränder des Fahrwegs in dem unteren Bereich entsprechen; und
daß der dritte Schritt das Extrahieren eines Paares von geraden Linien ($g_3$, $g_4$) umfaßt, die jenen der auftretenden charakteristischen Punktverteilungen angenähert sind, die dem einen und dem anderen der Ränder des Fahrwegs in dem oberen Bereich entsprechen; und
daß das Verfahren einen vierten Schritt des Einschätzens einer Kontur des Fahrwegs umfaßt auf Grundlage einer Positionsbeziehung zwischen einem Schnittpunkt der unteren geraden Linien des unteren Paares von geraden Linien und eines Schnittpunkts der oberen geraden Linien des oberen Paares von geraden Linien.

5. Fahrweg-Einschätzverfahren nach Anspruch 4, in dem der vierte Schritt einschätzt, daß der Fahrweg nach rechts biegt, wenn der Schnittpunkt der oberen geraden Linien rechts des Schnittpunkts der unteren geraden Linien liegt, und einschätzt, daß der Fahrweg nach links biegt, wenn der erstere links des letzteren liegt.

6. Fahrweg-Einschätzverfahren nach Anspruch 4 oder 5, in dem der vierte Schritt einschätzt, daß der Fahrweg abfällt, wenn der Schnittpunkt der oberen geraden Linien unter dem Schnittpunkt der unteren geraden Linien liegt, und einschätzt, daß der Fahrweg ansteigt, wenn der erstere über dem letzteren liegt.

7. Fahrweg-Einschätzverfahren nach Anspruch 4, 5 oder 6, in dem der zweite und der dritte Schritt dadurch gekennzeichnet sind, daß die zweite gerade Linie aus zwei von den Gruppen von geraden Linien extrahiert wird, die im Abstand auf der rechten und der linken Seite von einer Position der ersten geraden Linie auf dem Bild angeordnet sind mit einem Abstand, der der Breite-Information des Fahrwegs entspricht.

8. Fahrweg-Einschätzverfahren, nach Anspruch 4, 5, 6 oder 7, wobei das Verfahren ferner umfaßt: einen Schritt des Berechnens einer Position eines Horizonts (Ho) auf dem Bild auf Grundlage der vorgegebenen Positionsinformation der Kamera; und in dem der dritte Schritt das Extrahieren einer zweiten geraden Linie aus jenen der Gruppen von geraden Linien umfaßt, die nahe einem Schnittpunkt einer Position des Horizonts und der ersten geraden Linie passieren und von der ersten geraden Linie im Abstand angeordnet sind mit einem Abstand, der der vorgegebenen Breite-Information des Fahrwegs entspricht.

9. Fahrweg-Einschätzverfahren nach Anspruch 4, 5, 6, 7 oder 8, in dem der untere Bereich einen ersten Bereich (A1) umfaßt, in dem charakteristische Punktverteilungen auf dem Bild charakteristischer erscheinen, und der obere Bereich einen zweiten Bereich (A2) umfaßt, der dem ersten Bereich in der Richtung der Fortsetzung der charakteristischen Punktverteilungen benachbart ist; wobei das Verfahren umfaßt:
einen Schritt des Ermittelns von gerade-Linie-Gruppen von einer Mehrzahl von geraden Linien, die den charakteristischen Punktverteilungen auf dem Bild entsprechen; und wobei der dritte Schritt umfaßt: Extrahieren eines zweiten Paares von geraden Linien ($g_3$, $g_4$) aus jenen der gerade-Linie-Gruppen, die nahe einem Schnittpunkt einer Grenze des ersten und des zweiten Bereichs und des ersten Paares gerader Linien passieren, welche zu extrahierenden Linien jenen der auftretenden charakteristischen Punktverteilungen angenähert sind, die dem einen und dem anderen der Ränder des Fahrwegs in dem zweiten Bereich entsprechen.

10. Fahrweg-Einschätzverfahren nach Anspruch 9, in dem der Schritt des Ermittelns von gerade-Linie-Gruppen vor dem Schritt des Einteilens des Bildes in wenigstens zwei Bereiche durchgeführt wird.

11. Fahrweg-Einschätzverfahren nach Anspruch 9 oder 10, in dem der dritte Schritt umfaßt: den Schritt des Extrahierens einer Linie des ersten Paars gerader Linien ($g_1$, $g_2$), welche Linie der einen der auftretenden charakteristischen Punktverteilungen angenähert ist, die einem der Ränder des Fahrwegs in dem ersten Bereich entspricht, und den Schritt des Auswählens der anderen Linie des auftretenden ersten Paars gerader Linien auf Grundlage einer Position der ersten geraden Linie und einer vorgegebenen Breite-Information des Fahrwegs, welche Linie dem anderen der Ränder des Fahrwegs entspricht; und
wobei der vierte Schritt die Schritte umfaßt: Extrahieren einer Linie des zweiten Paars gerader Linien ($g_3$, $g_4$) aus jenen Linien der gerade-Linie-Gruppen, die nahe einem Schnittpunkt einer Grenze zwischen dem ersten und dem zweiten Bereich und der einen Linie der ersten Gruppe gerader Linien passieren, welche zu extrahierende Linie der einen der auftretenden charakteristischen Punktverteilungen angenähert ist, die einem der Ränder des Fahrwegs in dem zweiten Bereich entspricht, und Auswählen der anderen des auftretenden zweiten Paars gerader Linien auf Grundlage einer Position der zweiten geraden Linie und einer vorgegebenen Breite-Information des Fahrwegs, welche Linie dem anderen der Ränder des Fahrwegs entspricht.

## Revendications

1. Dispositif d'appréciation de la trajectoire pour apprécier le contour d'une trajectoire par traitement de données d'une image prise de la trajectoire, le dispositif comprenant :

un moyen de division d'image pour diviser les données en au moins deux régions incluant une région inférieure (A1) de l'image prise de la trajectoire et une région supérieure (A2) de cette dernière;

un moyen d'extraction de ligne droite inférieure (4, 5, 6, 7, 8, 9) pour extraire une première ligne droite inférieure proche d'une répartition de points caractéristiques semblant correspondre à l'un des bords de la trajectoire dans la région inférieure;

un moyen d'extraction de ligne droite supérieure (4, 5, 6, 7, 8, 9) pour extraire une première ligne droite supérieure proche d'une répartition de points caractéristiques semblant correspondre à l'un des bords de la trajectoire dans la région supérieure; et

caractérisé en ce qu'il comprend en outre :

un moyen de sélection de ligne droite inférieure pour sélectionner une seconde ligne droite inférieure parmi un groupe de lignes droites proches d'une répartition de points caractéristiques semblant correspondre à l'autre des bords de la trajectoire, en se fondant sur une position de la première ligne droite inférieure et une information de largeur prédéterminée concernant la trajectoire;

un moyen de sélection de ligne droite supérieure pour sélectionner une seconde ligne droite supérieure parmi un groupe de lignes droites proches d'une répartition de points caractéristiques semblant correspondre à l'autre des bords de la trajectoire, en se fondant sur une position de la première ligne droite supérieure et d'une information de largeur prédéterminée concernant la trajectoire; et

un moyen d'appréciation (10) pour apprécier un contour de la trajectoire en se fondant sur une intersection de ligne droite inférieure entre les première et seconde lignes droites inférieures, et d'une intersection de ligne droite supérieure entre les première et seconde lignes droites supérieures.

**2.** Dispositif d'appréciation de la trajectoire selon la revendication 1, dans lequel le moyen d' appréciation (10) apprécie le fait que la trajectoire s'incurve vers la droite lorsque l'intersection des lignes droites supérieures est à la droite de l'intersection des lignes droites inférieures et que la trajectoire s'incurve vers la gauche lorsque l'intersection des lignes droites supérieures est à la gauche de l'intersection des lignes droites inférieures.

**3.** Dispositif d'appréciation de la trajectoire selon la revendication 1 ou 2, dans lequel le moyen d'appréciation (10) apprécie le fait que la trajectoire est en pente descendante lorsque l'intersection des lignes droites supérieures se situe au-dessous de l'intersection des lignes droites inférieures, et que la trajectoire présente une pente montante lorsque l'intersection des lignes droites supérieures se situe au-dessus de l'intersection des lignes droites inférieures.

**4.** Procédé d'appréciation de la trajectoire pour apprécier le contour d'une trajectoire par traitement des données d'une image prise d'une trajectoire, le procédé comprenant :

une première étape de division des données en au moins deux régions incluant une région inférieure (A1) et une région supérieure (A2) de l'image prise de la trajectoire;

une seconde étape d'extraction d'une ligne droite ($g_1$) proche de répartitions de points caractéristiques semblant correspondre à l'un des bords de la trajectoire dans la région inférieure;

une troisième étape d'extraction d'une ligne droite ($g_2$) proche de celle de la répartition de points caractéristiques semblant correspondre à l'un des bords de la trajectoire dans la région supérieure; et

caractérisé en ce que :

ladite seconde étape comprend l'extraction d'une paire de lignes droites ($g_1$, $g_2$) proches de répartitions de points caractéristiques semblant correspondre à l'un et l'autre des bords de la trajectoire dans la région inférieure;

et en ce que ladite troisième étape comprend l'extraction d'une paire de lignes droites ($g_3$, $g_4$) proches de celles des répartitions de points caractéristiques semblant correspondre à l'un et l'autre des bords de la trajectoire dans la région supérieure;

et en ce que le procédé comprend une quatrième étape d'appréciation d'un contour de la trajectoire, fondé sur la relation de position entre une intersection des lignes droites inférieures de la paire inférieure de lignes droites, et une intersection des lignes droites supérieures de la paire supérieure de lignes droites.

**5.** Procédé d'appréciation de la trajectoire selon la revendication 4, dans lequel la quatrième étape apprécie le fait que la trajectoire s'incurve vers la droite lorsque l'intersection des lignes droites supérieures est à la droite de l'intersection des lignes droites inférieures, et apprécie le fait que la trajectoire s'incurve vers la gauche lorsque la première est à la gauche de la dernière.

**6.** Procédé d'appréciation de la trajectoire selon la revendication 4 ou 5, dans lequel la quatrième étape apprécie le fait que la trajectoire présente une pente descendante lorsque l'intersection des lignes droites supérieures se situe au-dessous de l'intersection des lignes droites inférieures, et apprécie le fait que la trajectoire présente une pente montante lorsque la première se situe au-dessus de la dernière.

**7.** Procédé d'appréciation de la trajectoire selon la revendication 4, 5 ou 6, dans lequel les seconde et troisième étapes sont caractérisées en ce que la seconde ligne droite est extraite parmi deux des groupes de lignes droites qui sont espacées vers les côtés droit et gauche d'une position de la première ligne droite sur l'image, d'une distance correspondant à l'information de largeur de la trajectoire.

**8.** Procédé d'appréciation de la trajectoire selon la revendication 4, 5, 6 ou 7, le procédé comprenant en outre :

une étape de calcul d'une position d'un horizon (Ho) sur l'image, sur la base de l'information de position prédéterminée fournie par la caméra; et dans lequel ladite troisième étape comprend l'extraction d'une seconde ligne droite parmi celles des groupes de lignes droites qui passent à proximité d'une intersection d'une position de l'horizon et de la première ligne droite et espacée de l'autre ligne droite d'une distance correspondant à une information de largeur prédéterminée de la trajectoire.

**9.** Procédé d'appréciation de la trajectoire selon la revendication 4, 5, 6, 7 ou 8, dans lequel la région inférieure comprend une première région (A1) dans laquelle des répartitions de points caractéristiques sur l'image apparaissent de façon plus caractéristique et la région supérieure comprend une seconde région (A2) qui est adjacente à la première région dans une direction de prolongation des répartitions de points caractéristiques; ledit procédé comprenant

une étape de fourniture de groupes de lignes droites d'un ensemble de lignes droites correspondant aux répartitions de points caractéristiques sur l'image; et ladite troisième étape comprenant

l'extraction d'une seconde paire de lignes droites ($g_3$, $g_4$) proches de celles des répartitions de points caractéristiques semblant correspondre à l'un et l'autre des bords de la trajectoire dans la seconde région, parmi celles des groupes de lignes droites qui passent à proximité d'une intersection entre la frontière des première et seconde régions et la première paire de lignes droites.

**10.** Procédé d'appréciation de la trajectoire selon la revendication 9, dans lequel l'étape de fourniture de groupes de lignes droites est exécutée avant l'étape de division de l'image en au moins deux régions.

**11.** Procédé d'appréciation de la trajectoire selon la revendication 9 ou 10, dans lequel la troisième étape comporte l'étape d'extraction de l'une de la première paire de lignes droites ($g_1$, $g_2$) proche de l'une des répartitions de points caractéristiques semblant correspondre à l'un des bords de la trajectoire dans la première région, et l'étape de sélection de l'autre de la première paire de lignes droites semblant correspondre à l'autre des bords de la trajectoire, en se fondant sur une position de la première ligne droite et une information de largeur prédéterminée de la trajectoire; et

la quatrième étape comporte les étapes d'extraction de l'une de la seconde paire de lignes droites ($g_3$, $g_4$) proches de l'une des répartitions de points caractéristiques semblant correspondre à l'un des bords de la trajectoire dans la seconde région parmi celles des groupes de lignes droites qui passent à proximité d'une intersection d'une frontière entre les première et seconde régions, et ladite ligne droite de la première paire, et de sélection de l'autre de la seconde paire de lignes droites semblant correspondre à l'autre des bords de la trajectoire, en se fondant sur une position de la seconde ligne droite et une information de largeur prédéterminée de la trajectoire.

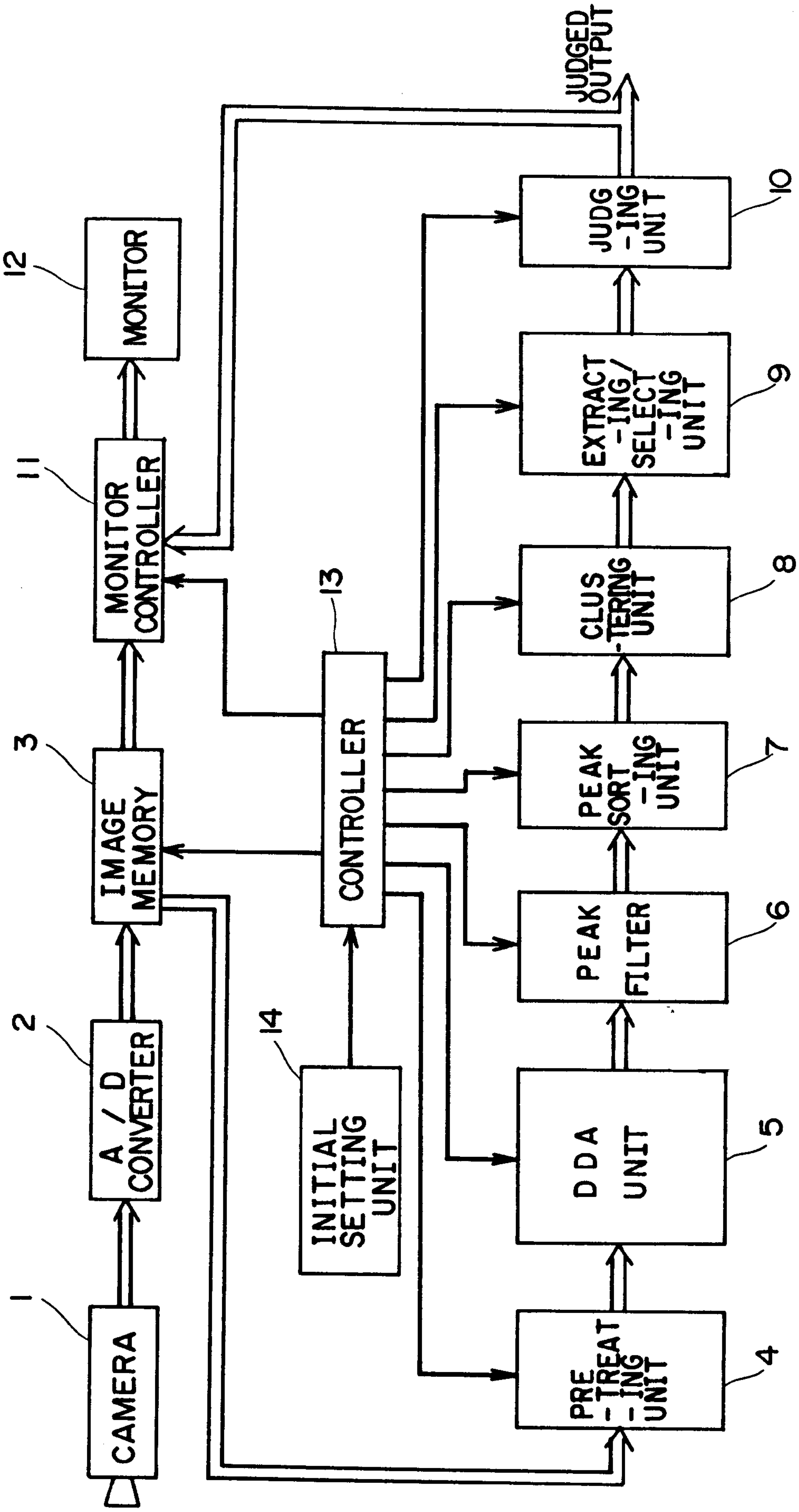
CAMERA
A / D CONVERTER
IMAGE MEMORY
MONITOR CONTROLLER
MONITOR
CONTROLLER
INITIAL SETTING UNIT
PRE-TREAT-ING UNIT
DDA UNIT
PEAK FILTER
PEAK SORT-ING UNIT
CLUS-TERING UNIT
EXTRACT-ING/SELECT-ING UNIT
JUDG-ING UNIT
JUDGED OUTPUT
1
2
3
4
5
6
7
8
9
10
11
12
13
14

Fig. 1

Fig. 2

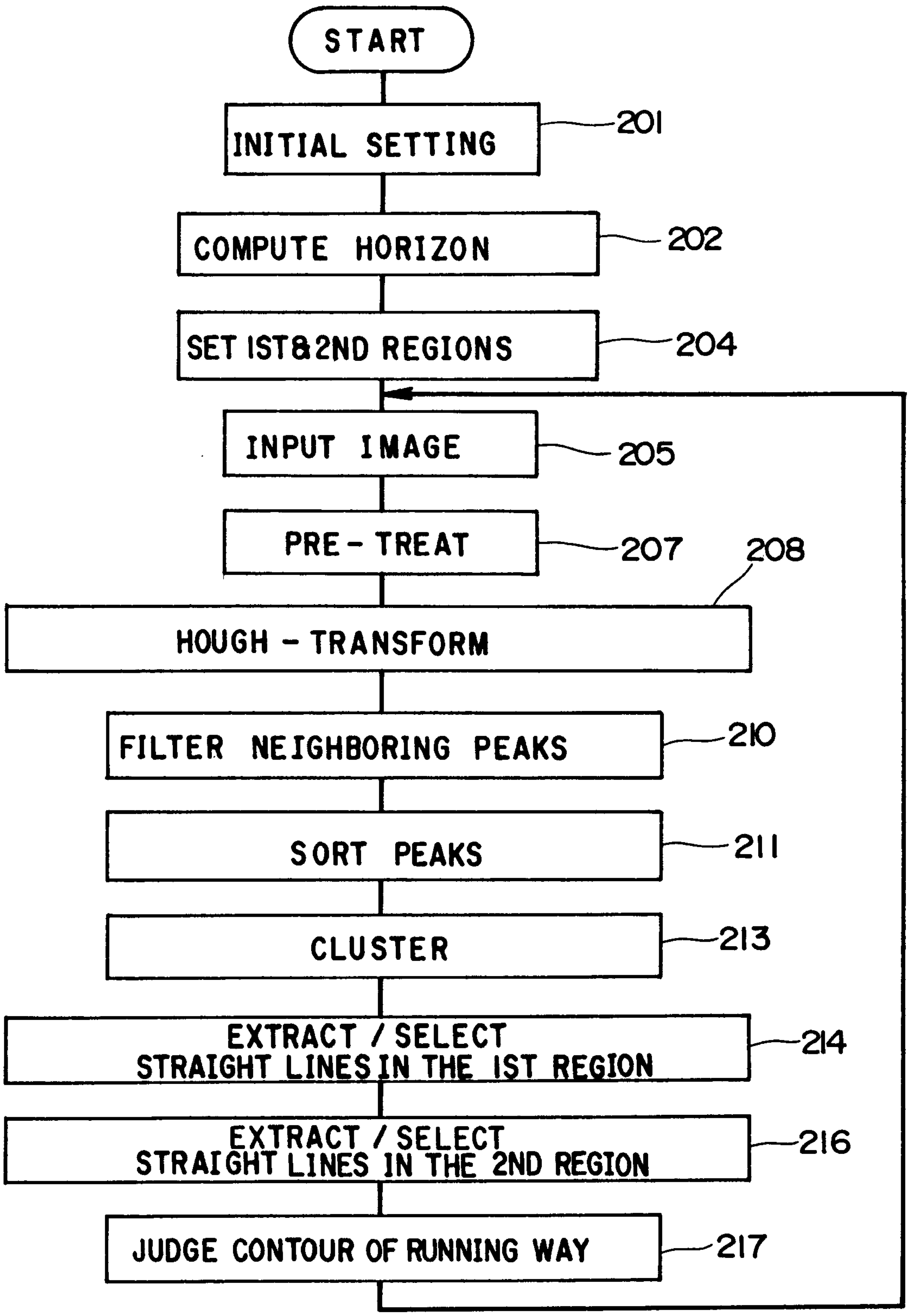
START
INITIAL SETTING
201
COMPUTE HORIZON
202
SET IST&2ND REGIONS
204
INPUT IMAGE
205
PRE-TREAT
207
208
HOUGH-TRANSFORM
FILTER NEIGHBORING PEAKS
210
SORT PEAKS
211
CLUSTER
213
EXTRACT / SELECT STRAIGHT LINES IN THE IST REGION
214
EXTRACT / SELECT STRAIGHT LINES IN THE 2ND REGION
216
JUDGE CONTOUR OF RUNNING WAY
217

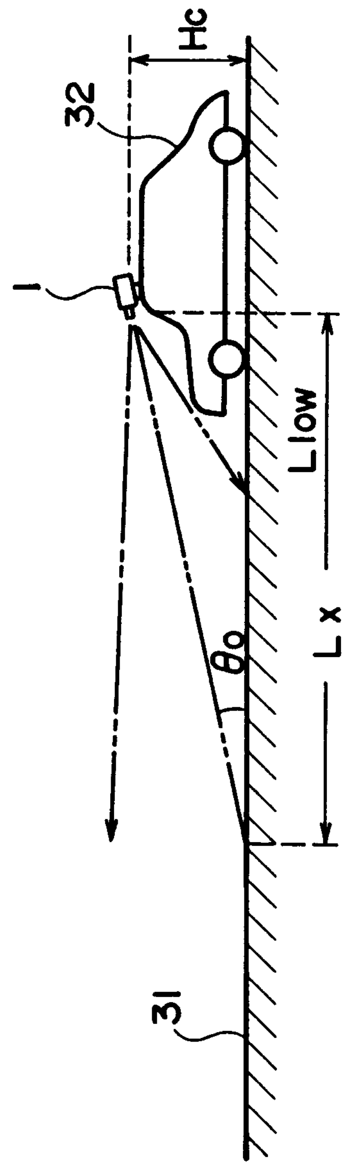


Fig.3(a)

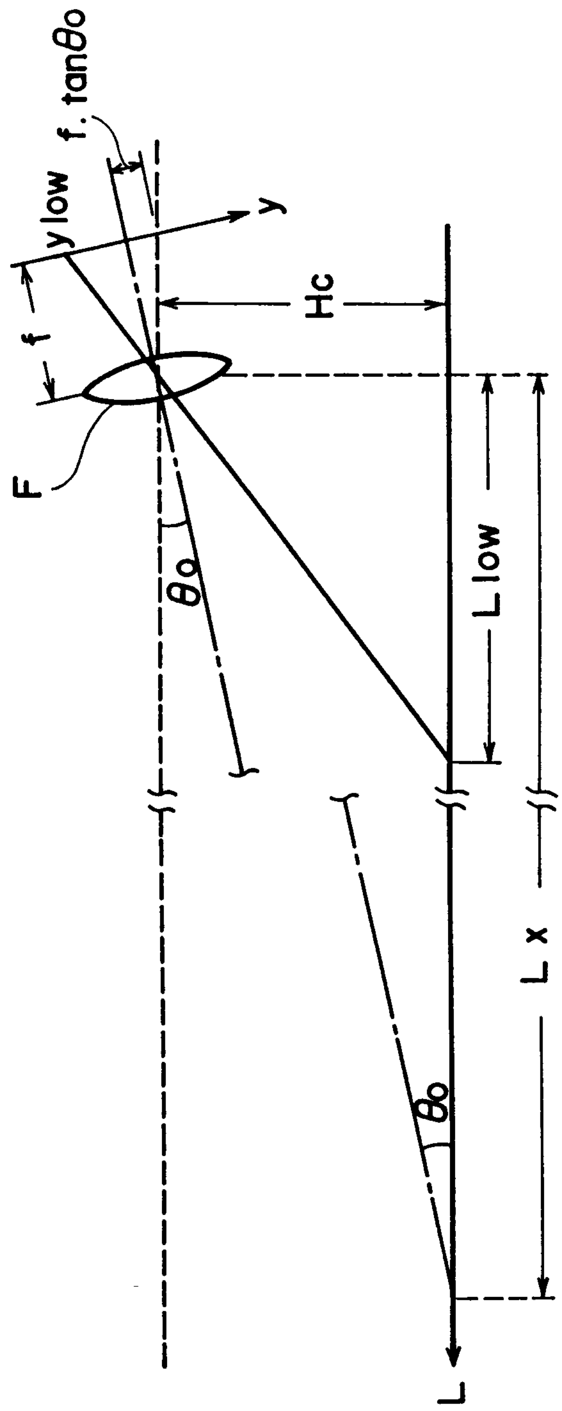


Fig.3(b)

Fig.4(a)

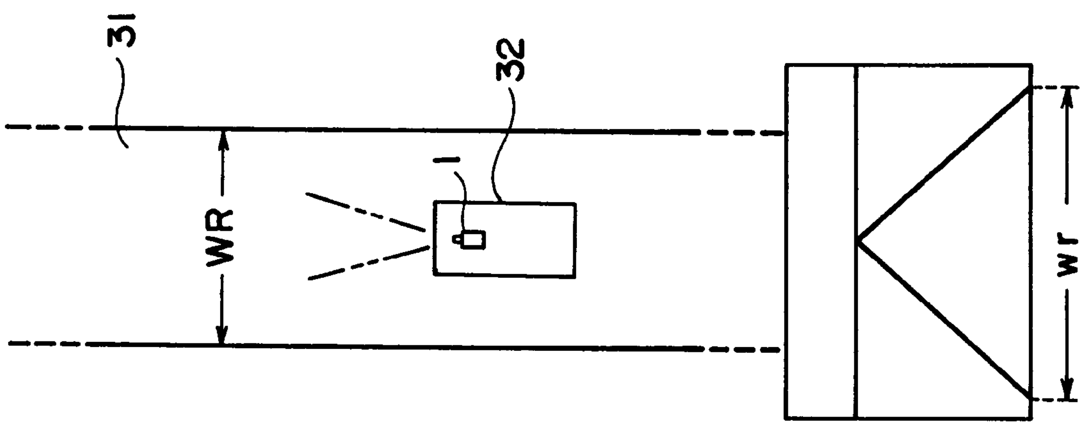


Fig.4(b)

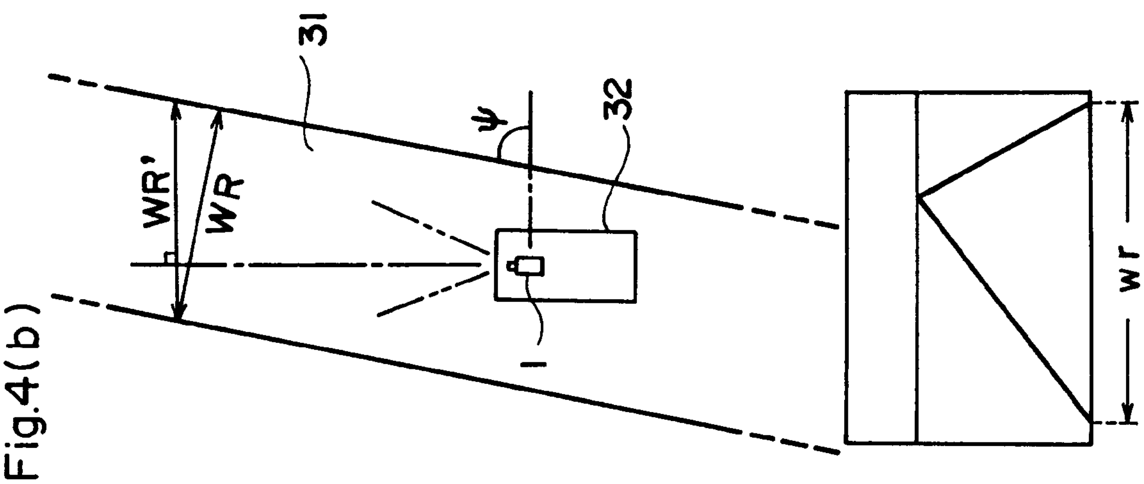


Fig.4(c)

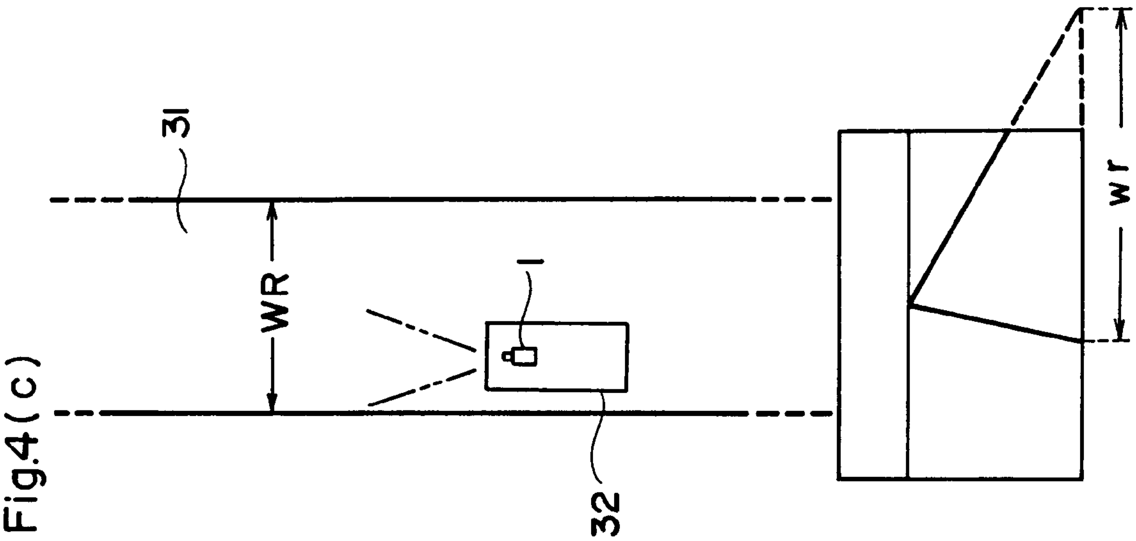

Fig.5

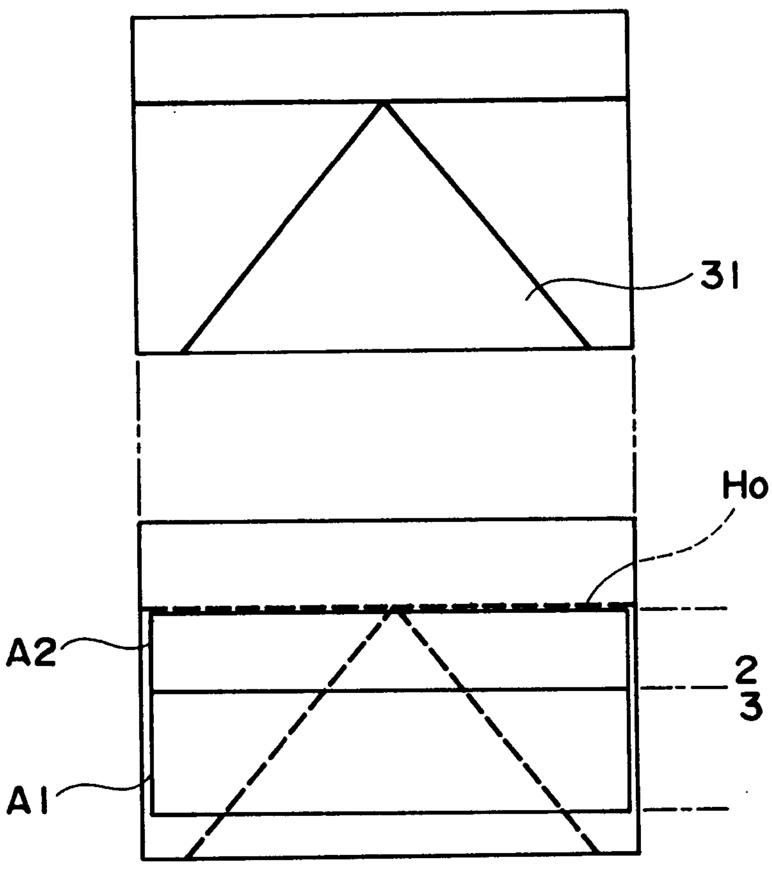

Fig.6 (a)

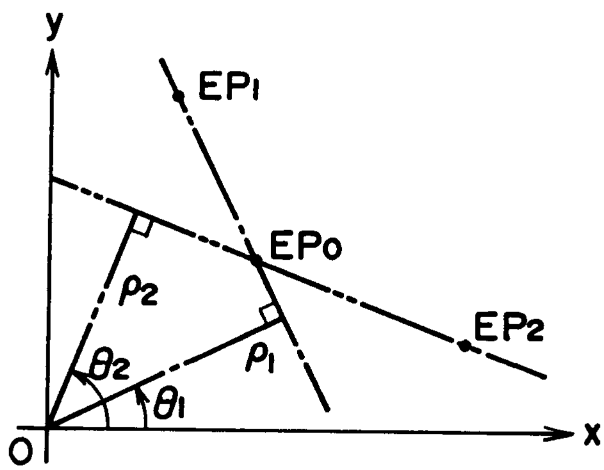
y
EP1
EP0
ρ2
EP2
θ2
ρ1
θ1
O
x

Fig.6 (b)

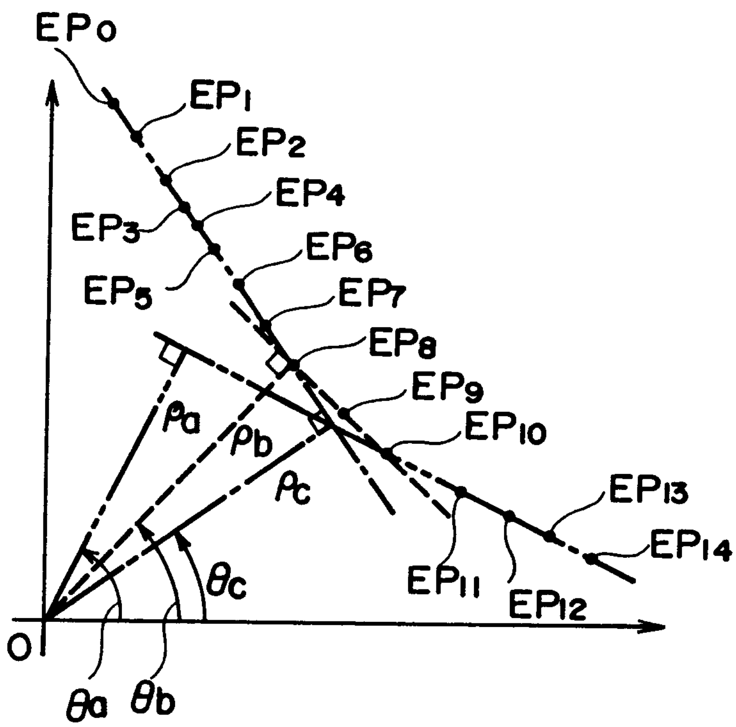
EP0
EP1
EP2
EP4
EP3
EP6
EP5
EP7
EP8
EP9
ρa
ρb
EP10
ρc
EP13
EP14
θc
EP11
EP12
O
θa
θb

Fig.7

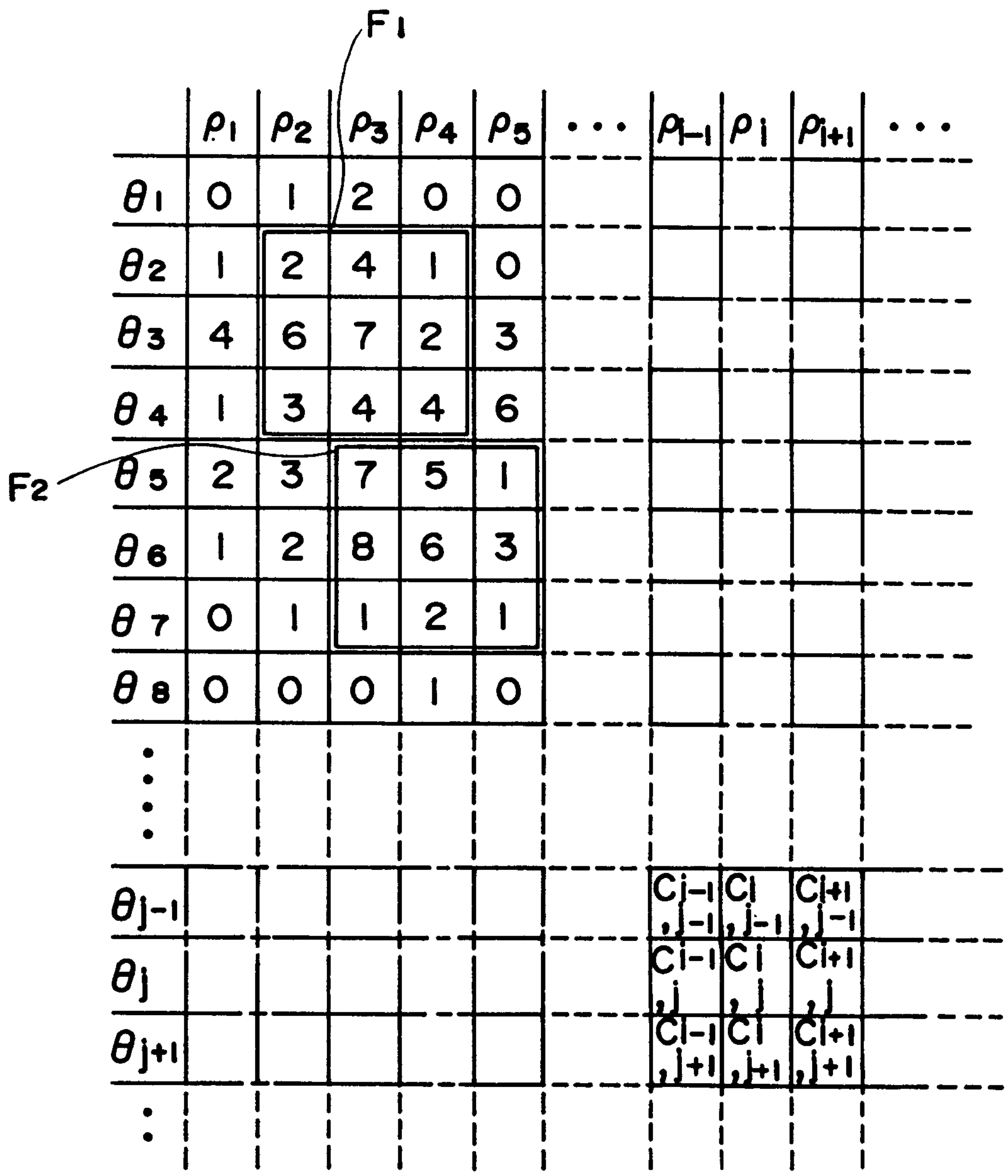
F1
F2
ρ1 ρ2 ρ3 ρ4 ρ5 ... ρi-1 ρi ρi+1 ...
θ1 0 1 2 0 0
θ2 1 2 4 1 0
θ3 4 6 7 2 3
θ4 1 3 4 4 6
θ5 2 3 7 5 1
θ6 1 2 8 6 3
θ7 0 1 1 2 1
θ8 0 0 0 1 0
θj-1 Ci-1,j-1 Ci,j-1 Ci+1,j-1
θj Ci-1,j Ci,j Ci+1,j
θj+1 Ci-1,j+1 Ci,j+1 Ci+1,j+1

Fig.8

| ORDER(k) | COUNT VALUE | $\rho$ | $\theta$ |
|---|---|---|---|
| 0 | $C_0$ | $\rho_0$ | $\theta_0$ |
| 1 | $C_1$ | $\rho_1$ | $\theta_1$ |
| 2 | $C_2$ | $\rho_2$ | $\theta_2$ |
| 3 | $C_3$ | $\rho_3$ | $\theta_3$ |
| ⋮ | ⋮ | ⋮ | ⋮ |
| n-2 | $C_{n-2}$ | $\rho_{n-2}$ | $\theta_{n-2}$ |
| n-1 | $C_{n-1}$ | $\rho_{n-1}$ | $\theta_{n-1}$ |

Fig.9

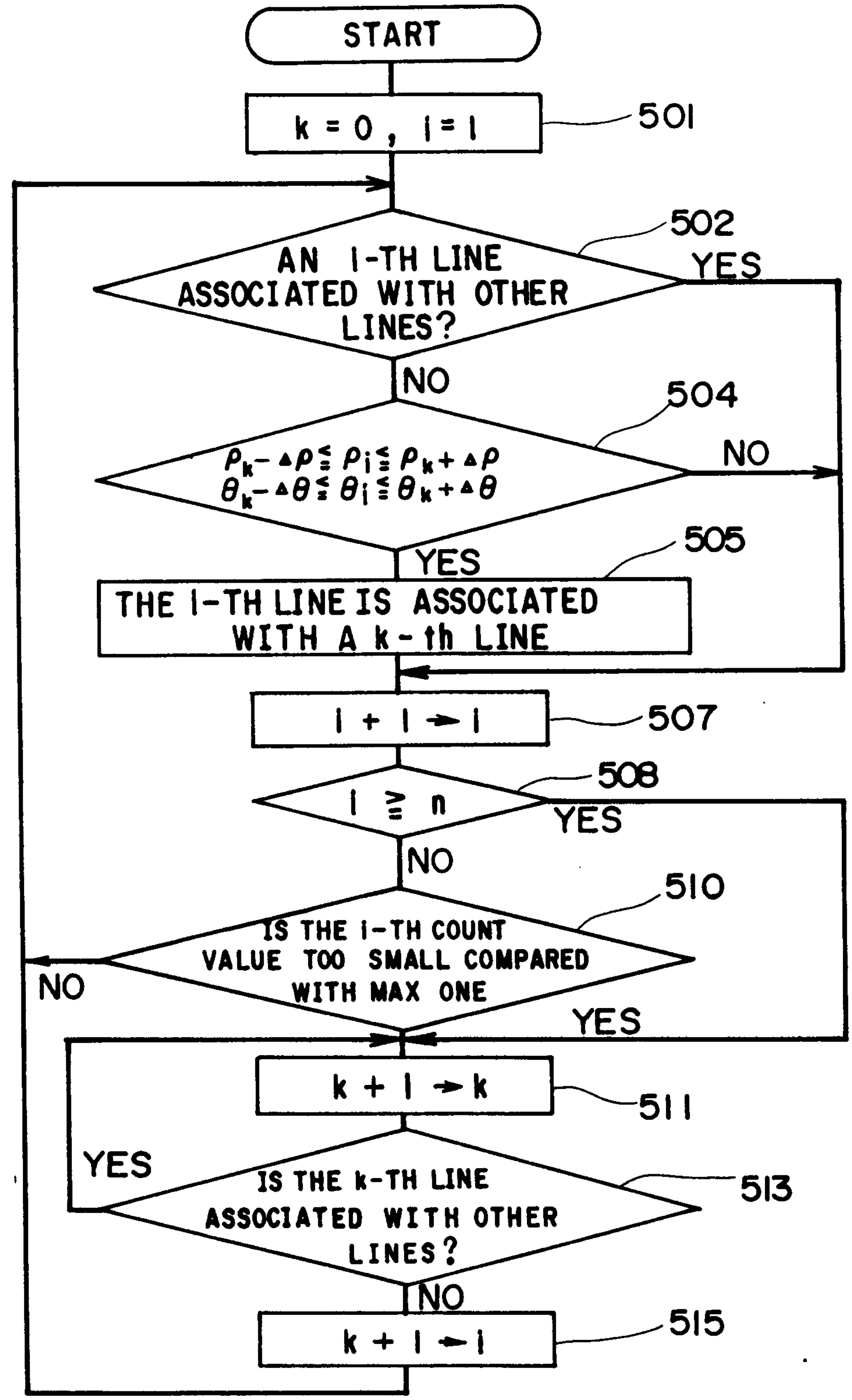
START
k = 0 , l = 1
501
AN l-TH LINE ASSOCIATED WITH OTHER LINES?
502
YES
NO
$\rho_k - \Delta\rho \leq \rho_l \leq \rho_k + \Delta\rho$
$\theta_k - \Delta\theta \leq \theta_l \leq \theta_k + \Delta\theta$
504
NO
YES
505
THE l-TH LINE IS ASSOCIATED WITH A k-th LINE
l + 1 → l
507
l ≧ n
508
YES
NO
IS THE l-TH COUNT VALUE TOO SMALL COMPARED WITH MAX ONE
510
NO
YES
k + 1 → k
511
YES
IS THE k-TH LINE ASSOCIATED WITH OTHER LINES?
513
NO
k + 1 → l
515

Fig. 10

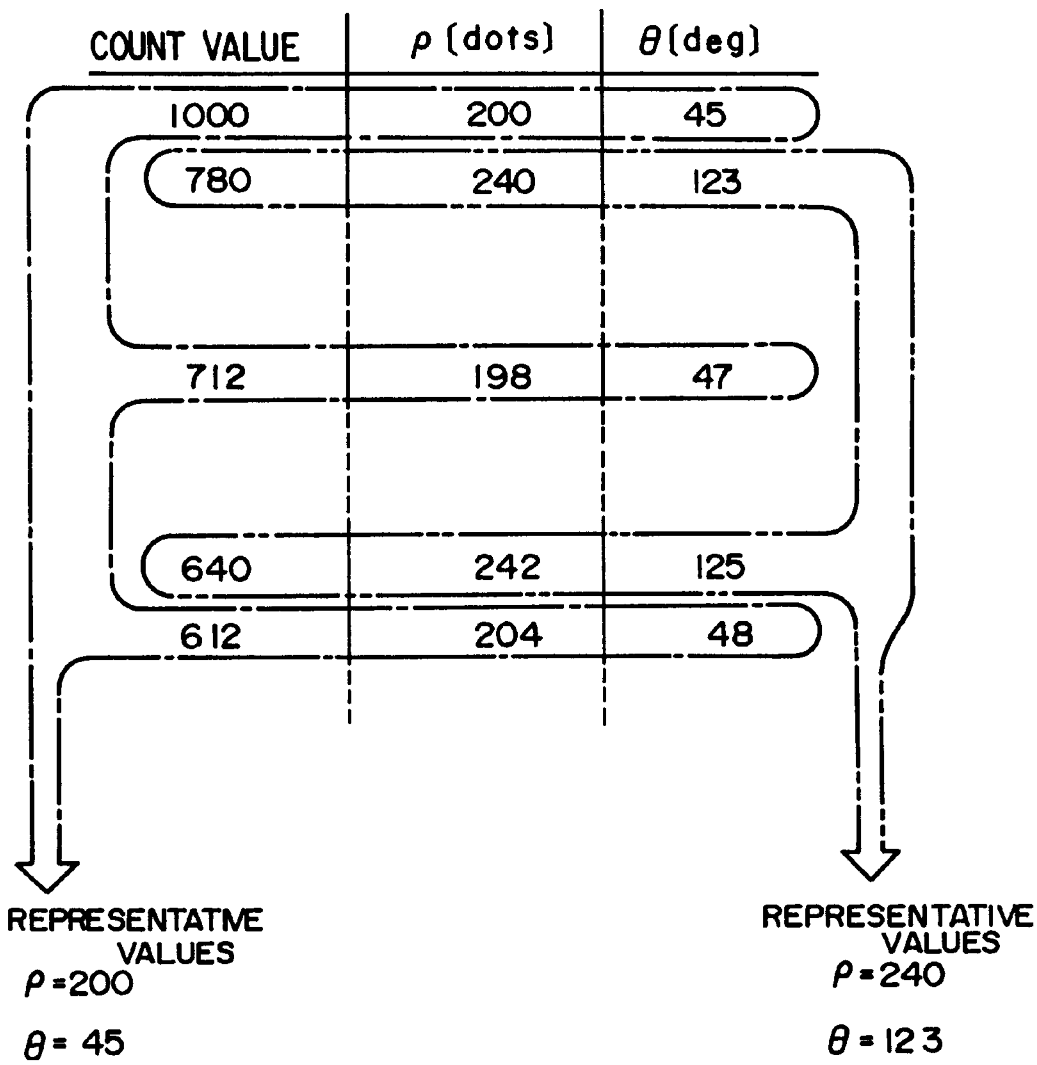
COUNT VALUE
ρ (dots)
θ (deg)
1000
200
45
780
240
123
712
198
47
640
242
125
612
204
48
REPRESENTATIVE VALUES
ρ = 200
θ = 45
REPRESENTATIVE VALUES
ρ = 240
θ = 123

Fig.11

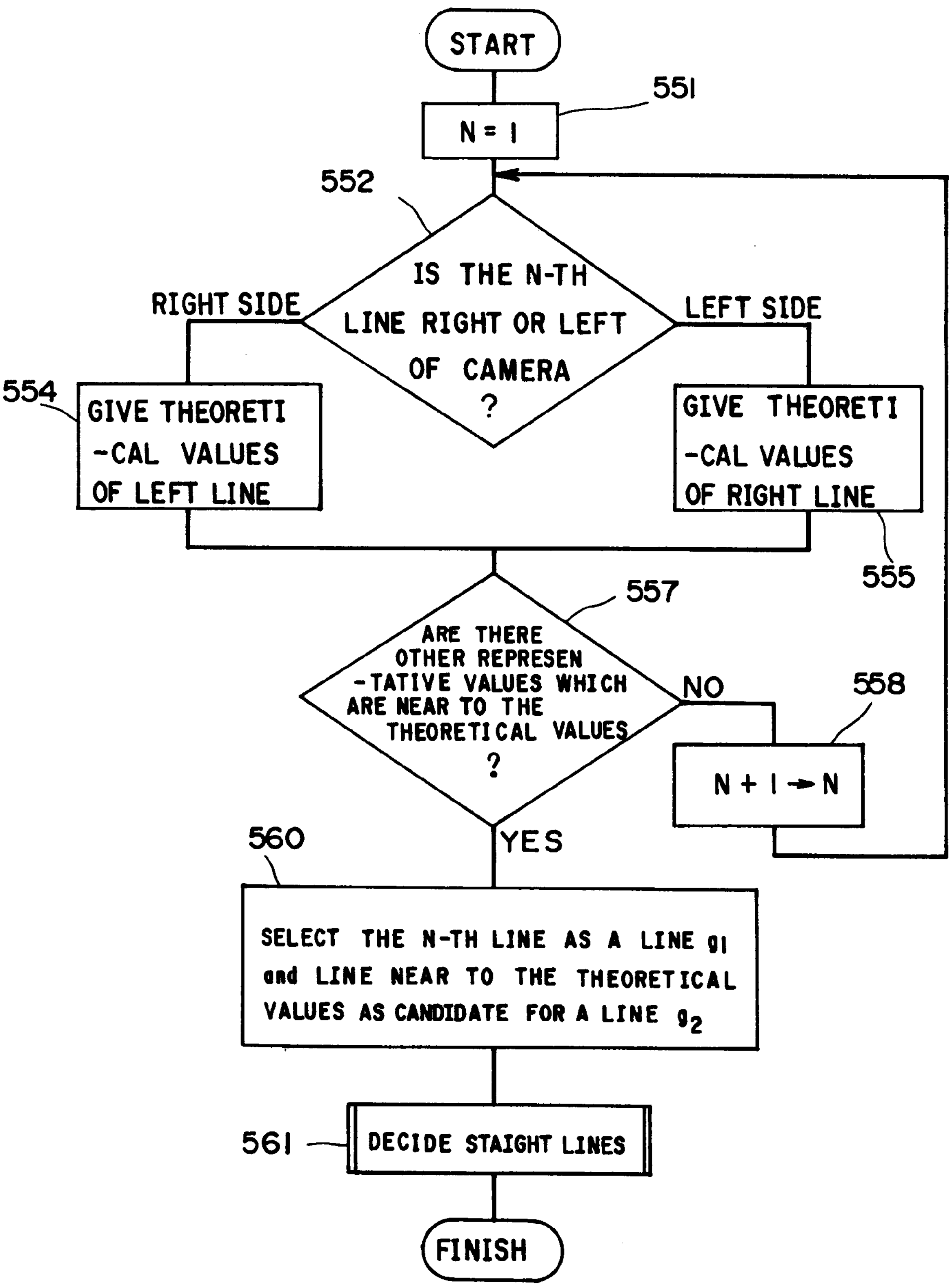
START
N = 1
551
552
IS THE N-TH LINE RIGHT OR LEFT OF CAMERA ?
RIGHT SIDE
LEFT SIDE
554
GIVE THEORETI -CAL VALUES OF LEFT LINE
GIVE THEORETI -CAL VALUES OF RIGHT LINE
555
557
ARE THERE OTHER REPRESEN -TATIVE VALUES WHICH ARE NEAR TO THE THEORETICAL VALUES ?
NO
558
N + 1 → N
YES
560
SELECT THE N-TH LINE AS A LINE g1 and LINE NEAR TO THE THEORETICAL VALUES AS CANDIDATE FOR A LINE g2
561
DECIDE STAIGHT LINES
FINISH

Fig. 12

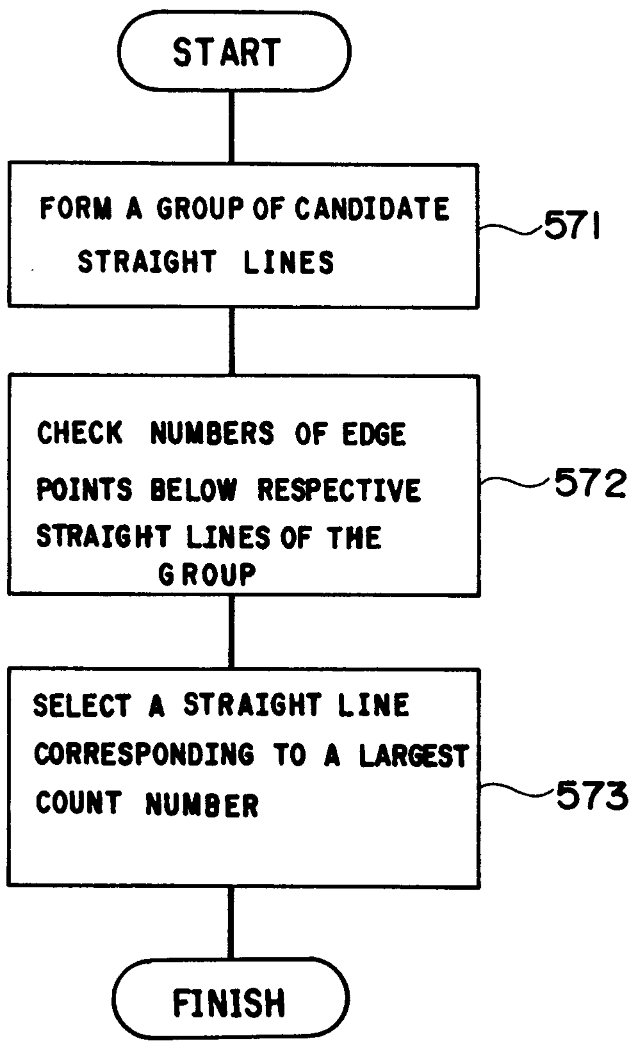
START
FORM A GROUP OF CANDIDATE STRAIGHT LINES
571
CHECK NUMBERS OF EDGE POINTS BELOW RESPECTIVE STRAIGHT LINES OF THE GROUP
572
SELECT A STRAIGHT LINE CORRESPONDING TO A LARGEST COUNT NUMBER
573
FINISH

Fig.13

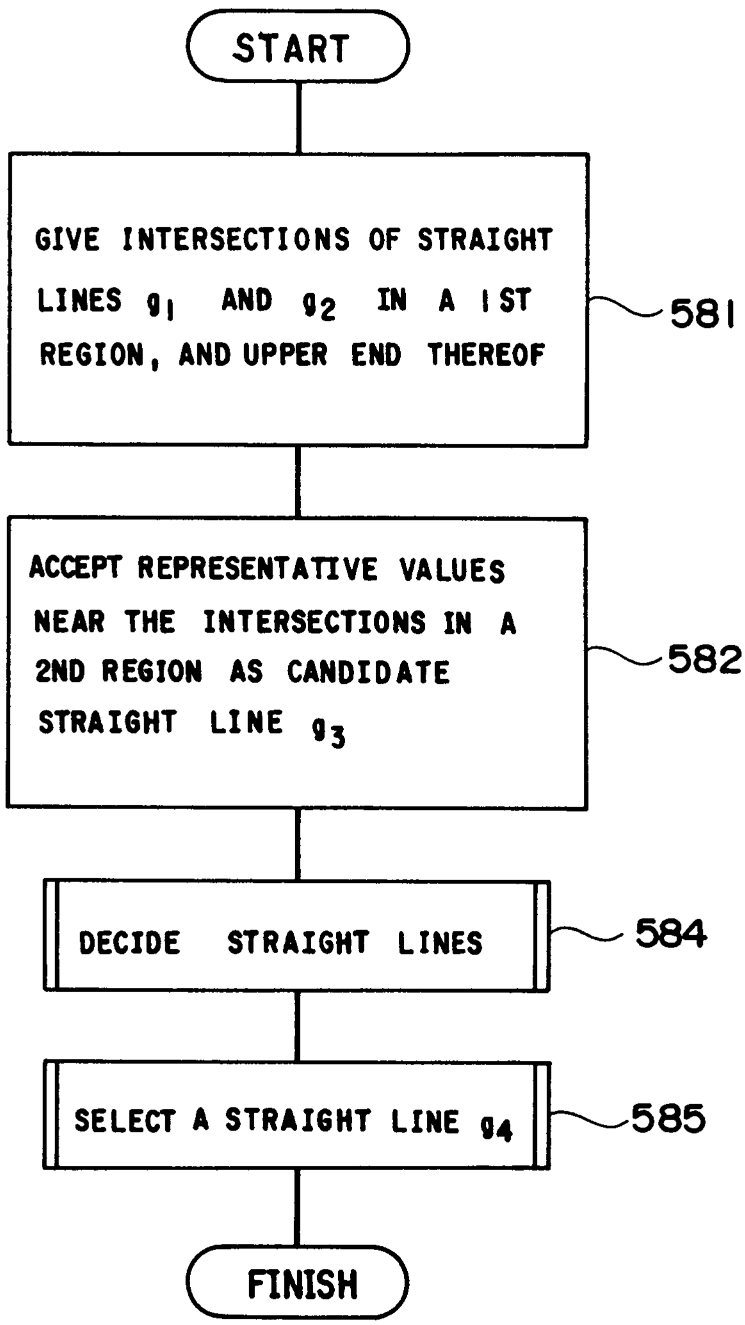
START
GIVE INTERSECTIONS OF STRAIGHT LINES $g_1$ AND $g_2$ IN A 1ST REGION, AND UPPER END THEREOF
581
ACCEPT REPRESENTATIVE VALUES NEAR THE INTERSECTIONS IN A 2ND REGION AS CANDIDATE STRAIGHT LINE $g_3$
582
DECIDE STRAIGHT LINES
584
SELECT A STRAIGHT LINE $g_4$
585
FINISH

Fig. 14

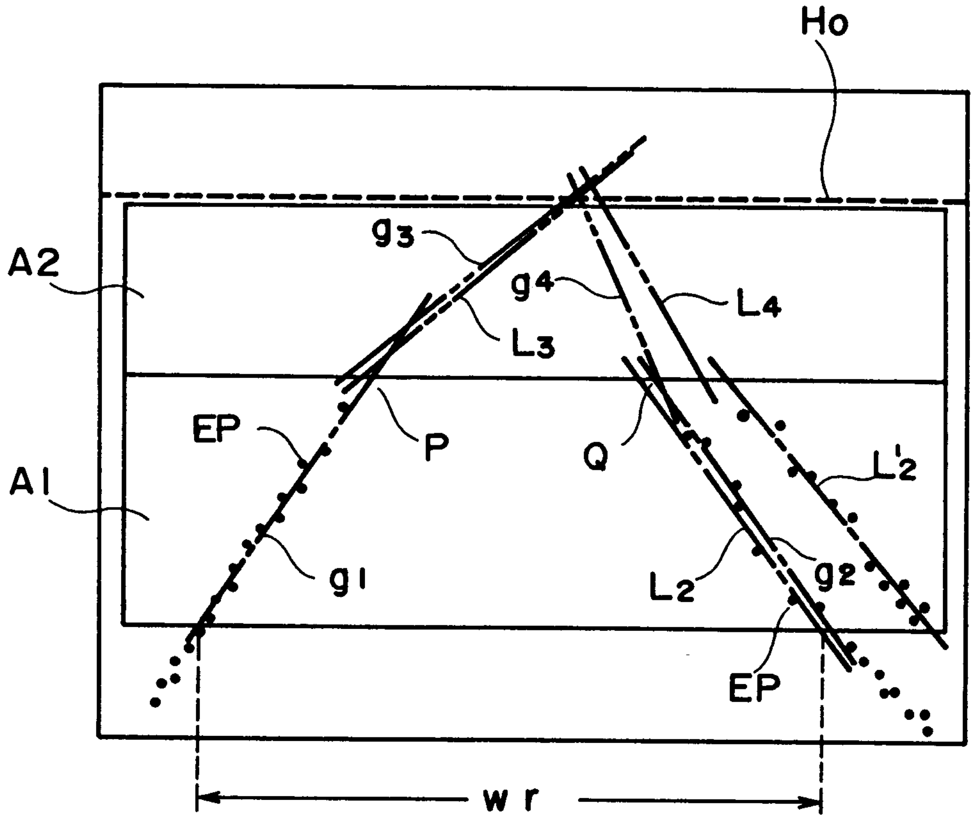

Fig.15(a)

Fig.15(b)

Fig.15(c)

Fig.15(d)

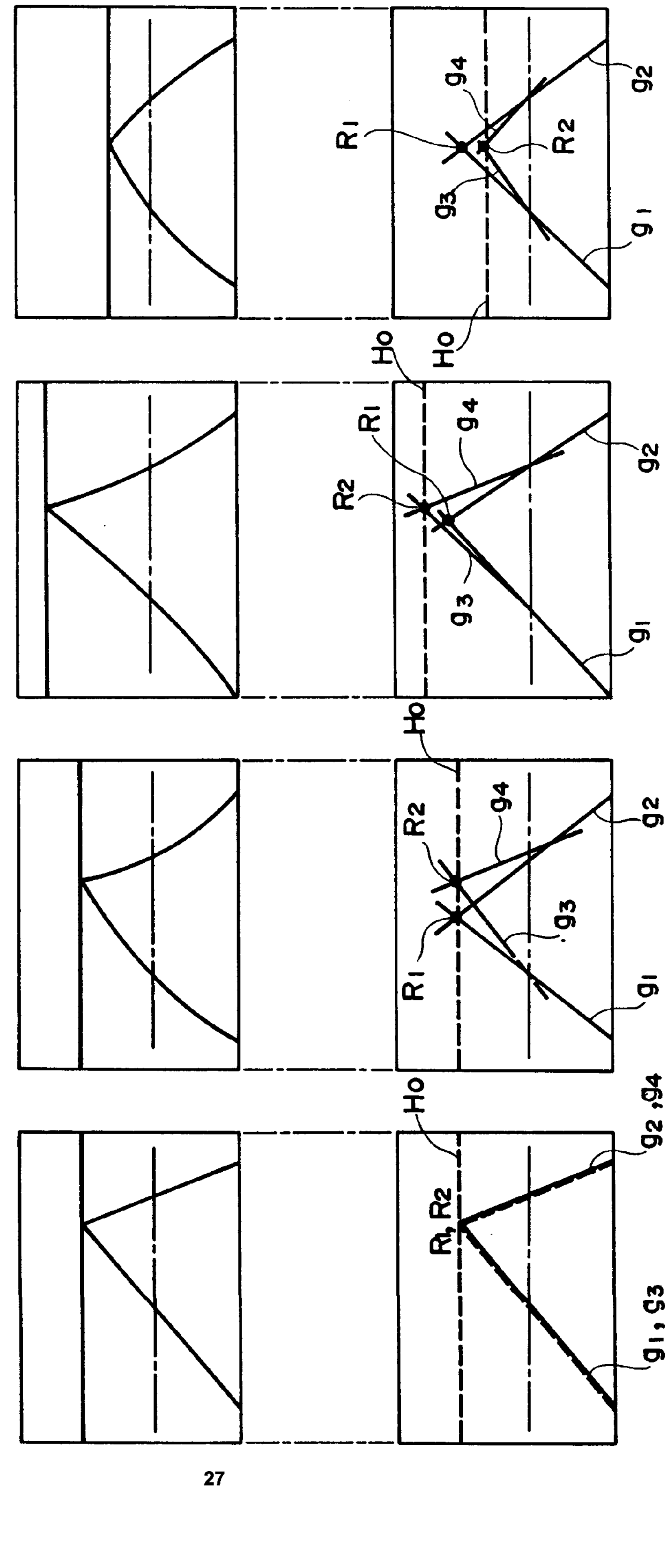

Fig.16(a)

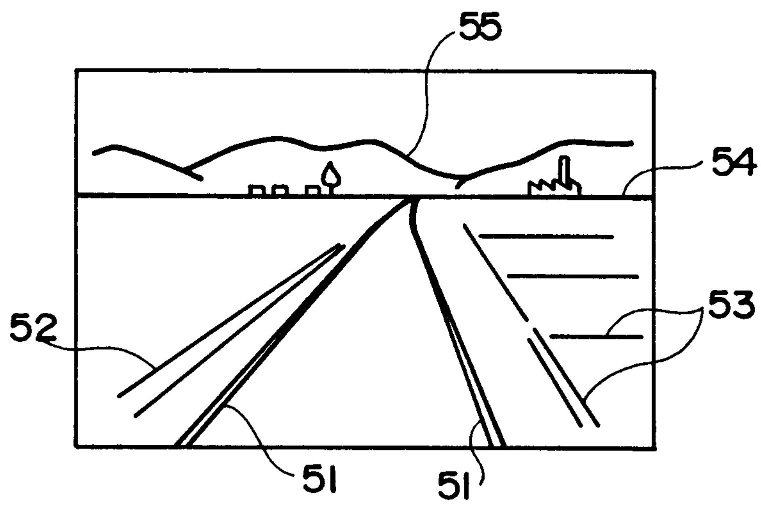


Fig.16(b)

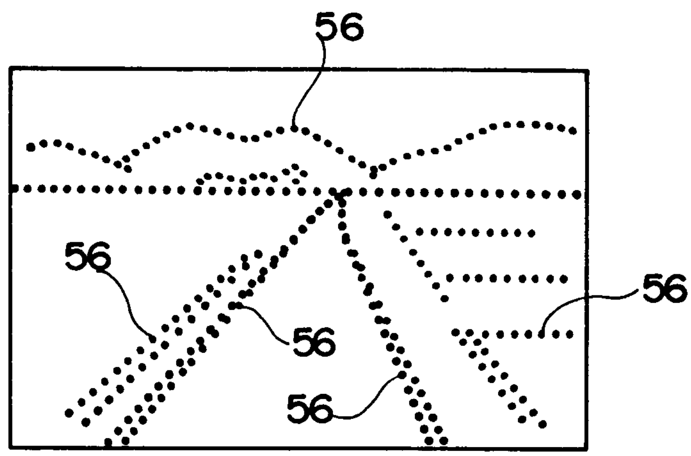


Fig.16(c)

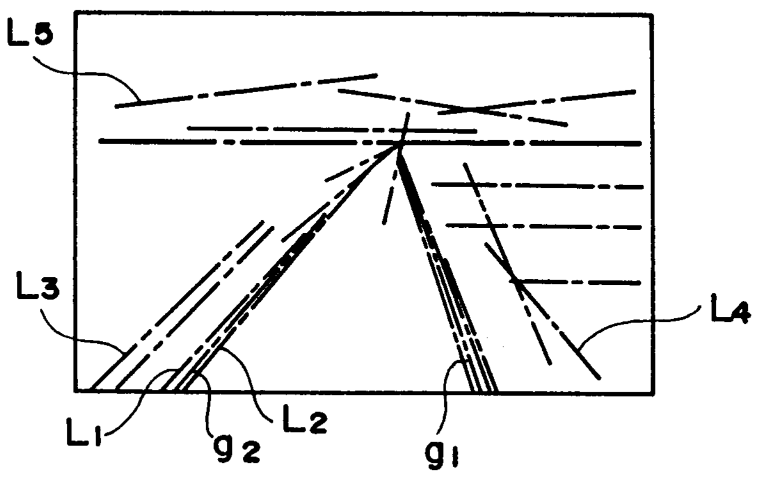

Fig.16(d)

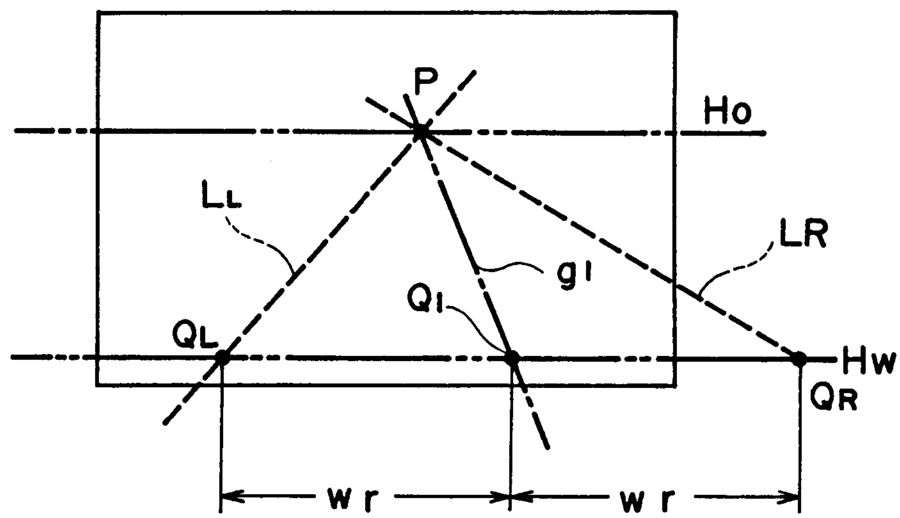


Fig.16(e)

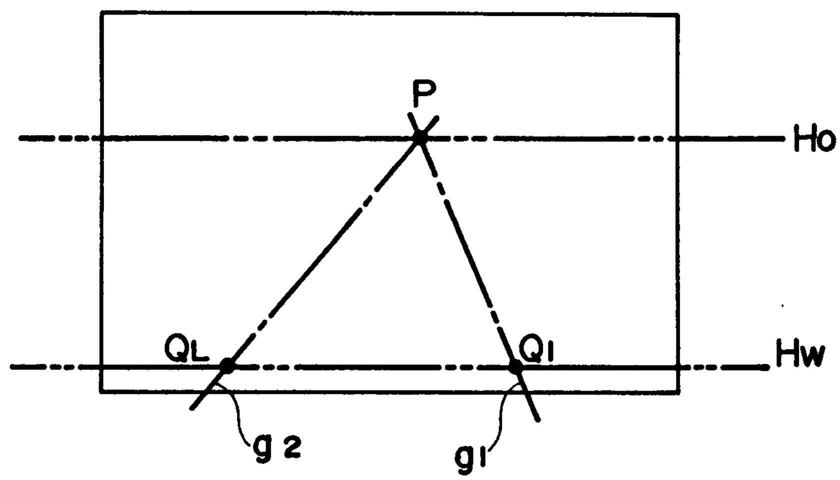

Fig.17(a)

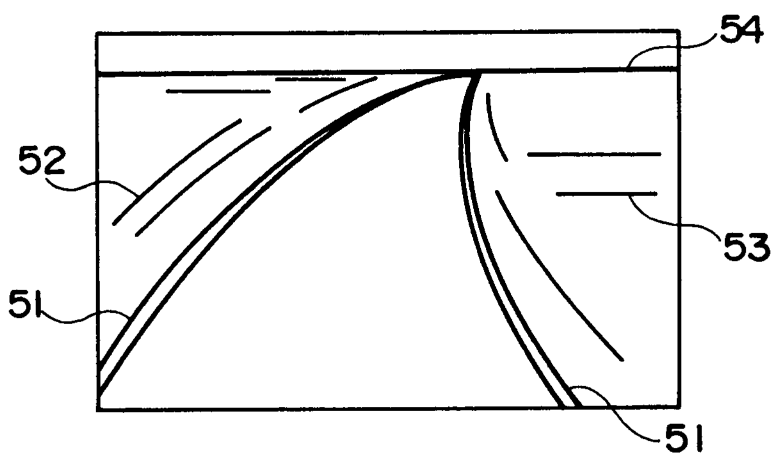


Fig.17(b)

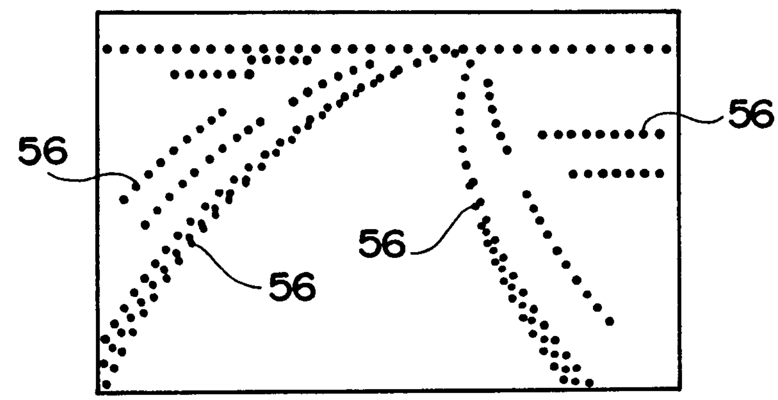


Fig.17(c)

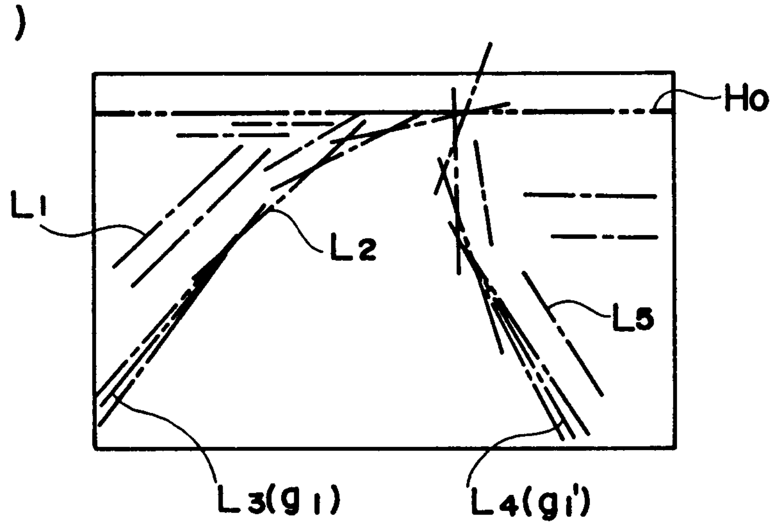

Fig.17(d)

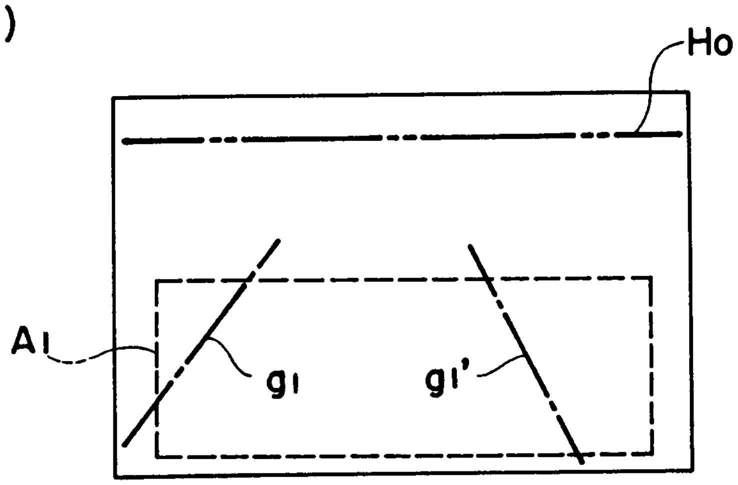


Fig.17(e)

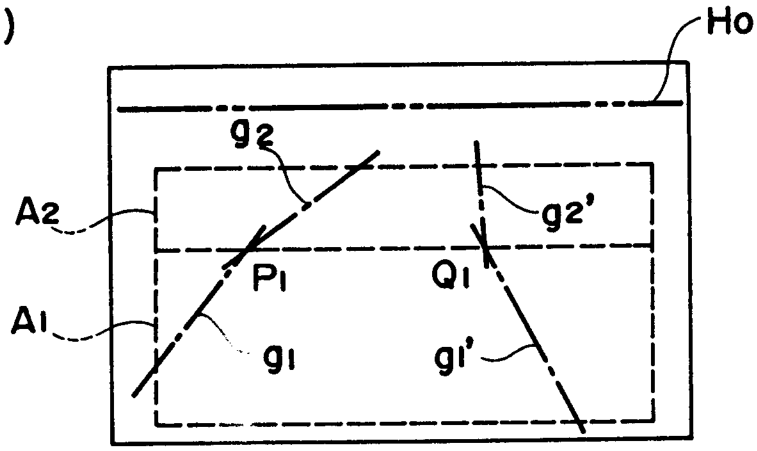


Fig.17(f)